# EUROPEAN PATENT SPECIFICATION

(11) **EP 3 460 403 B1**
(45) Date of publication and mention of the grant of the patent: **26.05.2021**
(21) Application number: 18196552.6
(22) Date of filing: 25.09.2018
(51) Int. Cl.: G01C 21/30, G01C 21/36

(54) **METHOD FOR CONTROLLING OPERATION SYSTEM OF A VEHICLE**
VERFAHREN ZUR STEUERUNG DES BETRIEBSSYSTEMS EINES FAHRZEUGS
PROCÉDÉ POUR COMMANDER LE SYSTÈME DE FONCTIONNEMENT D'UN VÉHICULE

(30) Priority: 26.09.2017 KR 20170124520
(43) Date of publication of application: 27.03.2019
(73) Proprietor: LG Electronics Inc., Yeongdeungpo-gu Seoul 07336 (KR)
(72) Inventor: LEE, Jinkyo, 07336 Seoul (KR); KIM, Jeongsu, 07336 Seoul (KR); EUM, Hyukmin, 07336 Seoul (KR)
(74) Representative: Vossius & Partner Patentanwälte Rechtsanwälte mbB

(56) References cited:
- EP-A1- 2 581 273
- EP-A1- 3 130 891
- EP-A1- 3 130 945
- EP-A2- 1 077 161
- WO-A2-2016/130719
- US-A1- 2010 174 486
- US-A1- 2016 010 998
- US-A1- 2016 265 919

## Description

This application claims the benefit of Korean Patent Application No. 10-2017-0124520, filed on Sep 26, 2017.

### BACKGROUND OF THE INVENTION

### Field of the Invention

The present disclosure relates to a method for controlling an operation system of a vehicle

### Discussion of the Related Art

A vehicle refers to a device that carries a passenger in a passenger-intended direction. A car is a major example of the vehicle.

To increase the convenience of vehicle users, a vehicle is equipped with various sensors and electronic devices. Especially, an Advanced Driver Assistance System (ADAS) and an autonomous vehicle are under active study to increase the driving convenience of users.

For autonomous driving of a vehicle, an autonomous driving route should first be generated. Conventionally, a driving route is generated based on navigation information or data sensed in real time by a vehicle during driving.

However, the former scheme does not consider an actual road and an ambient environment accurately and has limitations in appropriately dealing with a moving object. On the other hand, the latter scheme requires a time for processing sensed data. Particularly, when a vehicle is driving at a high speed, an object around the vehicle may not be handled rapidly.

In this context, there is a need for a method for increasing a route generation speed, when a route is generated for an autonomous vehicle and a manual vehicle

Patent document WO2016130719 A2 discloses systems and methods for constructing, using, and updating a sparse map for autonomous vehicle navigation.

Patent document EP3130945 A1 discloses a system and method for precision vehicle positioning.

Patent document EP3130891 A1 discloses a system and method for matching of road data objects for generating and updating a digital road description database.

### SUMMARY OF THE INVENTION

Accordingly, an aspect of the present disclosure is to provide a method for controlling a operation system of a vehicle, which fast generates a driving route for the vehicle in consideration of an object around the vehicle.

Another aspect of the present disclosure is to provide a method for generating a safe driving route. The aforementioned objects are achieved by the independent claims. Dependent claims refer to preferred embodiments.

Additional advantages, objects, and features of the present disclosure will be set forth in part in the description which follows and in part will become apparent to those having ordinary skill in the art upon examination of the following or may be learned from practice of the present disclosure. The objectives and other advantages of the present disclosure may be realized and attained by the structure particularly pointed out in the written description and claims hereof as well as the appended drawings.

It is to be understood that both the foregoing general description and the following detailed description of the present disclosure are exemplary and explanatory and are intended to provide further explanation of the present disclosure as claimed.

### BRIEF DESCRIPTION OF THE DRAWINGS

The accompanying drawings, which are included to provide a further understanding of the present disclosure and are incorporated in and constitute a part of this application, illustrate embodiment(s) of the present disclosure and together with the description serve to explain the principle of the present disclosure. In the drawings:
FIG. 1 is a view illustrating the exterior of a vehicle according to an embodiment of the present disclosure;
FIG. 2 is a view illustrating exteriors of a vehicle, seen at various angles from the outside of the vehicle according to an embodiment of the present disclosure;
FIGS. 3 and 4 are views illustrating interiors of a vehicle according to an embodiment of the present disclosure;
FIGS. 5 and 6 are views referred to for describing objects according to an embodiment of the present disclosure;
FIG. 7 is a block diagram of a vehicle according to an embodiment of the present disclosure;
FIG. 8 is a block diagram of an operation system according to an embodiment of the present disclosure;
FIG. 9 is a flowchart illustrating an operation of the operation system according to an embodiment of the present disclosure;
FIG. 10 is a flowchart illustrating a step for storing fixed object information (S930) illustrated in FIG. 9;
FIG. 11A is a flowchart illustrating a step for generating a driving route for a vehicle (S950) illustrated in FIG. 9;
FIG. 11B is a flowchart illustrating a step for updating fixed object information and storing the updated fixed object information (S960) illustrated in FIG. 9;
FIGS. 12, 13 and 14 are views referred to for describing an operation system 800 according to an embodiment of the present disclosure;
FIG. 15A is a flowchart illustrating a step for controlling a display unit (S990) illustrated in FIG. 9; and
FIGS. 15B and 15C are views referred to for describing an operation system according to an embodiment of the present disclosure.

### DETAILED DESCRIPTION OF THE INVENTION

Embodiments disclosed in the present disclosure will be described in detail with reference to the attached drawings. Like reference numerals denote the same or similar components throughout the drawings and a redundant description of the same components will be avoided. The terms with which the names of components are suffixed, 'module' and 'unit' are assigned or interchangeably used with each other, only in consideration of the readiness of specification writing. The terms do not have any distinguishable meanings or roles. A detailed description of a related known technology will be omitted lest it should obscure the subject matter of embodiments of the present disclosure. Further, the attached drawings are provided to help easy understanding of embodiments disclosed in the present disclosure, not limiting the scope and spirit of the present disclosure. Thus, it is to be understood that the present disclosure covers all modifications, equivalents, and/or alternatives falling within the scope and spirit of the present disclosure.

While ordinal numbers including 'first', "second', etc. may be used to describe various components, they are not intended to limit the components. These expressions may be used to distinguish one component from another component.

When it is said that a component is 'coupled with/to' or 'connected to' another component, it should be understood that the one component is connected to the other component directly or through any other component in between. On the other hand, when it is said that a component is 'directly connected to' or 'directly coupled to' another component, it should be understood that there is no other component between the components.

Singular forms include plural referents unless the context clearly dictates otherwise.

In the present disclosure, the term 'have', 'may have', 'include', or 'may include' signifies the presence of a specific feature, number, step, operation, component, or part, or their combinations, not excluding the presence or addition of one or more other features, numbers, steps, operations, components, or parts, or their combinations.

The term 'vehicle' used in the present disclosure may cover a car and a motorbike in concept. The following description is given with the appreciation that a vehicle is a car, by way of example.

In the present disclosure, a vehicle may be any of an internal combustion vehicle equipped with an engine as a power source, a hybrid vehicle equipped with an engine and an electrical motor as power sources, an electric vehicle equipped with an electrical motor as a power source, and so on.

In the following description, the left of a vehicle means the left of a driving direction of the vehicle, and the right of the vehicle means the right of the driving direction of the vehicle.

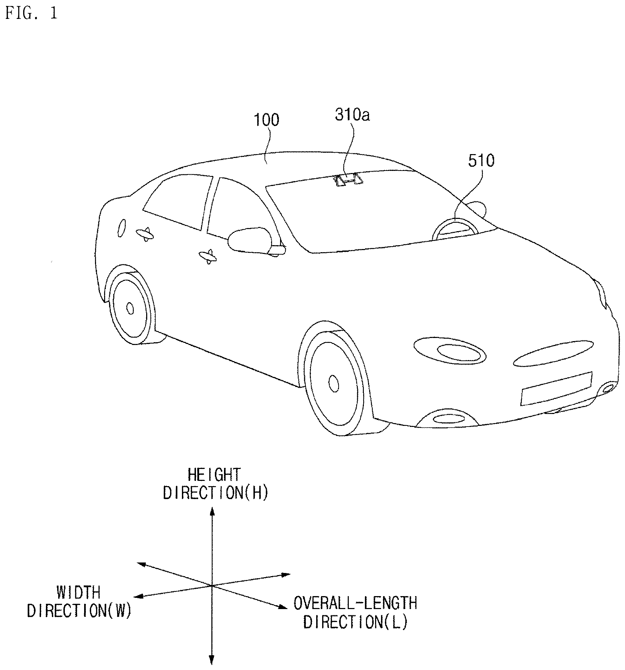

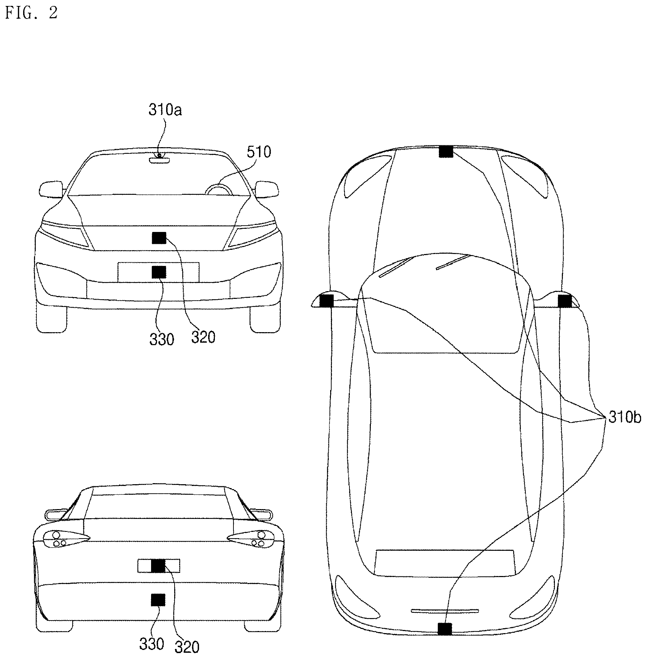

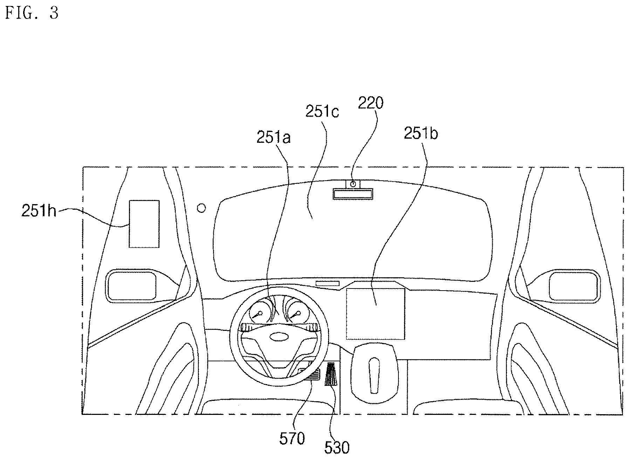

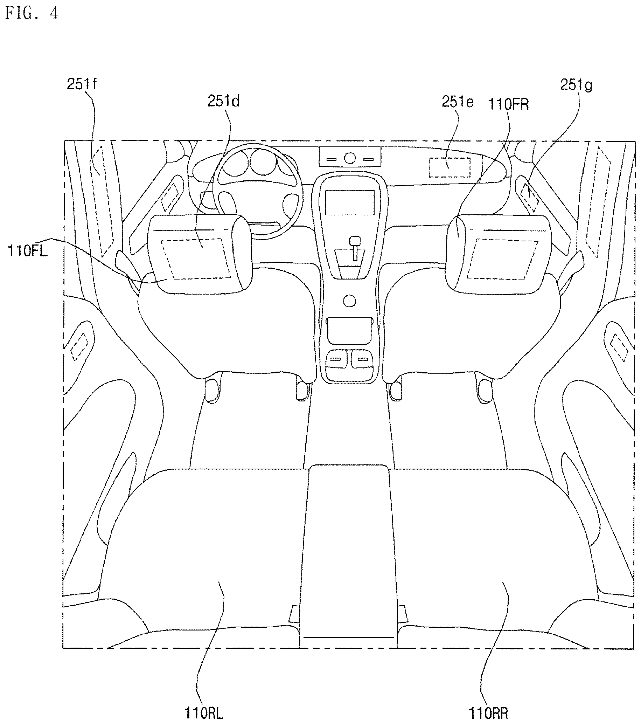

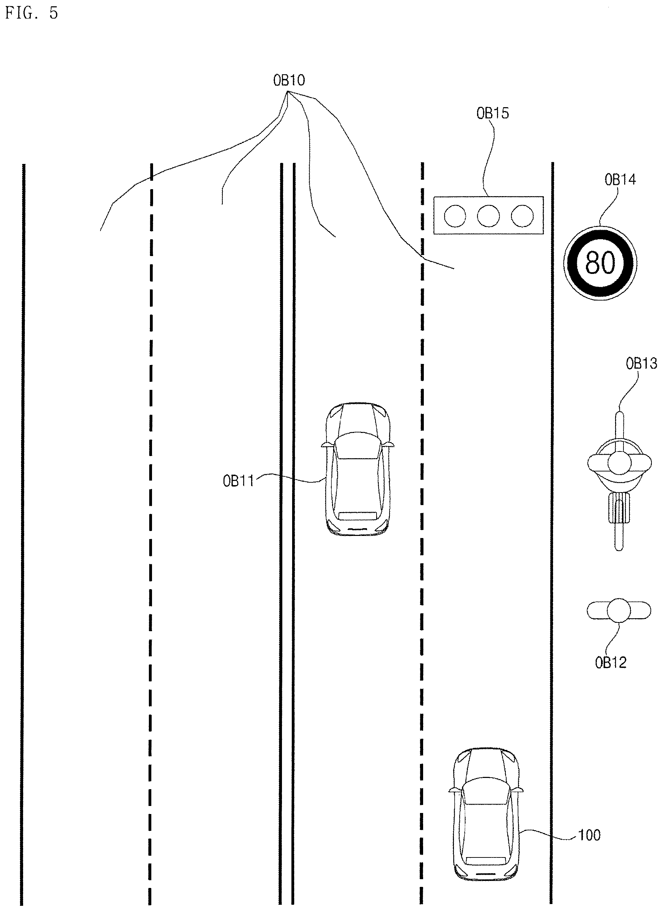

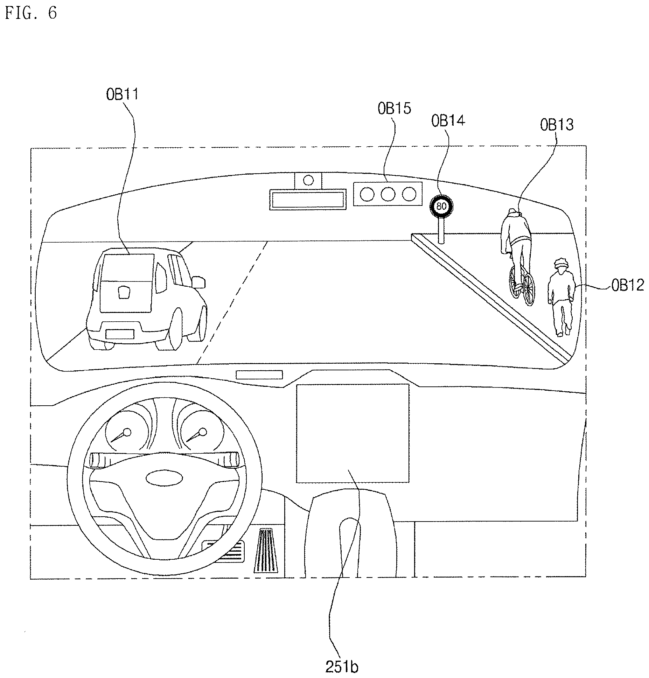

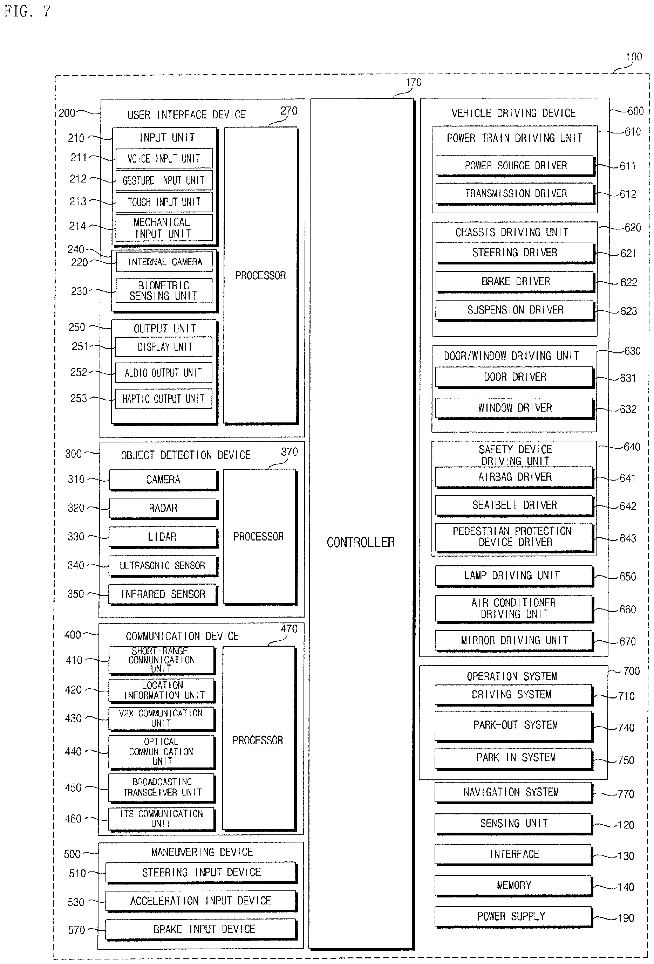

FIG. 1 is a view illustrating the exterior of a vehicle according to an embodiment of the present disclosure, FIG. 2 is a view illustrating exteriors of a vehicle, seen at various angles from the outside of the vehicle according to an embodiment of the present disclosure, FIGS. 3 and 4 are views illustrating interiors of a vehicle according to an embodiment of the present disclosure, FIGS. 5 and 6 are views referred to for describing objects according to an embodiment of the present disclosure, and FIG. 7 is a block diagram of a vehicle according to an embodiment of the present disclosure.

Referring to FIGS. 1 to 7, a vehicle 100 may include wheels rotated by a power source, and a steering input device 510 for controlling a driving direction of the vehicle 100.

The vehicle 100 may be an autonomous vehicle.

The vehicle 100 may switch to an autonomous mode or a manual mode according to a user input.

For example, the vehicle 100 may switch from the manual mode to the autonomous mode or from the autonomous mode to the manual mode, based on a user input received through a User Interface (UI) device 200.

The vehicle 100 may switch to the autonomous mode or the manual mode based on driving situation information.

The driving situation information may include at least one of object information being information about objects outside the vehicle 100, navigation information, or vehicle state information.

For example, the vehicle 100 may switch from the manual mode to the autonomous mode or from the autonomous mode to the manual mode, based on driving situation information generated from an object detection device 300.

For example, the vehicle 100 may switch from the manual mode to the autonomous mode or from the autonomous mode to the manual mode, based on driving situation information generated from a communication device 400.

The vehicle 100 may switch from the manual mode to the autonomous mode or from the autonomous mode to the manual mode, based on information, data, or a signal received from an external device.

If the vehicle 100 drives in the autonomous mode, the autonomous vehicle 100 may drive based on an operation system 700.

For example, the autonomous vehicle 100 may drive based on information, data, or signals generated from a driving system 710, a park-out system 740, and a park-in system.

If the vehicle 100 drives in the manual mode, the autonomous vehicle 100 may receive a user input for driving through a maneuvering device 500. The vehicle 100 may drive based on the user input received through the maneuvering device 500.

An overall length refers to a length from the front side to the rear side of the vehicle 100, an overall width refers to a width of the vehicle 100, and an overall height refers to a length from the bottom of a wheel to the roof of the vehicle 100. In the following description, an overall length direction L may mean a direction based on which the overall length of the vehicle 700 is measured, an overall width direction W may mean a direction based on which the overall width of the vehicle 700 is measured, and an overall height direction H may mean a direction based on which the overall height of the vehicle 700 is measured.

Referring to FIG. 7, the vehicle 100 may include the user interface device200, the object detection device 300, the communication device 400, the maneuvering device 500, a vehicle driving device 600, the operation system 700, a navigation system 770, a sensing unit 120, an interface 130, a memory 140, a controller 170, and a power supply 190.

According to an embodiment, the vehicle 100 may further include a new component in addition to the components described in the present disclosure, or may not include a part of the described components.

The sensing unit 120 may sense a state of the vehicle 100. The sensing unit 120 may include a posture sensor (e.g., a yaw sensor, a roll sensor, and a pitch sensor), a collision sensor, a wheel sensor, a speed sensor, an inclination sensor, a weight sensor, a heading sensor, a yaw sensor, a gyro sensor, a position module, a vehicle forwarding/backwarding sensor, a battery sensor, a fuel sensor, a tire sensor, a handle rotation-based steering sensor, a vehicle internal temperature sensor, a vehicle internal humidity sensor, an ultrasonic sensor, an illumination sensor, an accelerator pedal position sensor, a brake pedal position sensor, and so on.

The sensing unit 120 may acquire sensing signals for vehicle posture information, vehicle collision information, vehicle heading information, vehicle location information (Global Positioning System (GPS) information), vehicle angle information, vehicle speed information, vehicle acceleration information, vehicle inclination information, vehicle forwarding/backwarding information, battery information, fuel information, tire information, vehicle lamp information, vehicle internal temperature information, vehicle internal humidity information, a steering wheel rotation angle, a vehicle external illuminance, a pressure applied to an accelerator pedal, a pressure applied to a brake pedal, and so on.

The sensing unit 120 may further include an accelerator pedal sensor, a pressure sensor, an engine speed sensor, an Air Flow Sensor (AFS), an Air Temperature Sensor (ATS), a Water Temperature Sensor (WTS), a Throttle Position Sensor (TPS), a Top Dead Center (TDC) sensor, a Crank Angle Sensor (CAS), and so on.

The sensing unit 120 may generate vehicle state information based on sensing data. The vehicle state information may be information generated based on data sensed by various sensors in the vehicle 100.

For example, the vehicle state information may include vehicle posture information, vehicle speed information, vehicle inclination information, vehicle weight information, vehicle heading information, vehicle battery information, vehicle fuel information, vehicle tire pressure information, vehicle steering information, vehicle internal temperature information, vehicle internal humidity information, pedal position information, vehicle engine temperature information, and so on.

The interface 130 may serve paths to various types of external devices connected to the vehicle 100. For example, the interface 130 may be provided with a port connectable to a mobile terminal, and may be connected to a mobile terminal through the port. In this case, the interface 130 may exchange data with the mobile terminal.

Meanwhile, the interface 130 may serve as a path in which electric energy is supplied to a connected mobile terminal. If a mobile terminal is electrically connected to the interface 130, the interface 130 may supply electric energy received from the power supply 190 to the mobile terminal under the control of the controller 170.

The memory 140 is electrically connected to the controller 170. The memory 140 may store basic data for a unit, control data for controlling an operation of the unit, and input and output data. The memory 140 may be any of various storage devices in hardware, such as a Read Only Memory (ROM), a Random Access Memory (RAM), an Erasable and Programmable ROM (EPROM), a flash drive, and a hard drive. The memory 140 may store various data for overall operations of the vehicle 100, such as programs for processing or controlling in the controller 170.

According to an embodiment, the memory 140 may be integrated with the controller 170, or configured as a lower-layer component of the controller 170.

The controller 170 may provide overall control to each unit inside the vehicle 100. The controller 170 may be referred to as an Electronic Control Unit (ECU).

The power supply 190 may supply power needed for operating each component under the control of the controller 170. Particularly, the power supply 190 may receive power from a battery within the vehicle 100.

One or more processors and the controller 170 in the vehicle 100 may be implemented using at least one of Application Specific Integrated Circuits (ASICs), Digital Signal Processors (DSPs), Digital Signal Processing Devices (DSPDs), Programmable Logic Device (PLDs), Field Programmable Gate Arrays (FPGAs), processors, controllers, microcontrollers, microprocessors, and an electrical unit for executing other functions.

Further, the sensing unit 120, the interface 130, the memory 140, the power supply 190, the user interface device200, the object detection device 300, the communication device 400, the maneuvering device 500, the vehicle driving device 600, the operation system 700, and the navigation system 770 may have individual processors or may be integrated into the controller 170.

The user interface device200 is a device used to enable the vehicle 100 to communicate with a user. The user interface device200 may receive a user input, and provide information generated from the vehicle 100 to the user. The vehicle 100 may implement UIs or User Experience (UX) through the user interface device200.

The user interface device200 may include an input unit 210, an internal camera 220, a biometric sensing unit 230, an output unit 250, and a processor 270. Each component of the user interface device200 may be separated from or integrated with the afore-described interface 130, structurally and operatively.

According to an embodiment, the user interface device200 may further include a new component in addition to components described below, or may not include a part of the described components.

The input unit 210 is intended to receive information from a user. Data collected by the input unit 210 may be analyzed and processed as a control command from the user by the processor 270.

The input unit 210 may be disposed inside the vehicle 100. For example, the input unit 210 may be disposed in an area of a steering wheel, an area of an instrument panel, an area of a seat, an area of each pillar, an area of a door, an area of a center console, an area of a head lining, an area of a sun visor, an area of a windshield, an area of a window, or the like.

The input unit 210 may include a voice input unit 211, a gesture input unit 212, a touch input unit 213, and a mechanical input unit 214.

The voice input unit 211 may convert a voice input of the user to an electrical signal. The electrical signal may be provided to the processor 270 or the controller 170.

The voice input unit 211 may include one or more microphones.

The gesture input unit 212 may convert a gesture input of the user to an electrical signal. The electrical signal may be provided to the processor 270 or the controller 170.

The gesture input unit 212 may include at least one of an InfraRed (IR) sensor and an image sensor, for sensing a gesture input of the user.

According to an embodiment, the gesture input unit 212 may sense a Three-Dimensional (3D) gesture input of the user. For this purpose, the gesture input unit 212 may include a light output unit for emitting a plurality of IR rays or a plurality of image sensors.

The gesture input unit 212 may sense a 3D gesture input of the user by Time of Flight (ToF), structured light, or disparity.

The touch input unit 213 may convert a touch input of the user to an electrical signal. The electrical signal may be provided the processor 270 or the controller 170.

The touch input unit 213 may include a touch sensor for sensing a touch input of the user.

According to an embodiment, a touch screen may be configured by integrating the touch input unit 213 with a display unit 251. This touch screen may provide both an input interface and an output interface between the vehicle 100 and the user.

The mechanical input unit 214 may include at least one of a button, a dome switch, a jog wheel, or a jog switch. An electrical signal generated by the mechanical input unit 214 may be provided to the processor 270 or the controller 170.

The mechanical input unit 214 may be disposed on the steering wheel, a center fascia, the center console, a cockpit module, a door, or the like.

The processor 270 may start a learning mode of the vehicle 100 in response to a user input to at least one of the afore-described voice input unit 211, gesture input unit 212, touch input unit 213, or mechanical input unit 214. In the learning mode, the vehicle 100 may learn a driving route and ambient environment of the vehicle 100. The learning mode will be described later in detail in relation to the object detection device 300 and the operation system 700.

The internal camera 220 may acquire a vehicle interior image. The processor 270 may sense a state of a user based on the vehicle interior image. The processor 270 may acquire information about the gaze of a user in the vehicle interior image. The processor 270 may sense a user's gesture in the vehicle interior image.

The biometric sensing unit 230 may acquire biometric information about a user. The biometric sensing unit 230 may include a sensor for acquiring biometric information about a user, and acquire information about a fingerprint, heart beats, and so on of a user, using the sensor. The biometric information may be used for user authentication.

The output unit 250 is intended to generate a visual output, an acoustic output, or a haptic output.

The output unit 250 may include at least one of the display unit 251, an audio output unit 252, or a haptic output unit 253.

The display unit 251 may display graphic objects corresponding to various pieces of information.

The display unit 251 may include at least one of a Liquid Crystal Display (LCD), a Thin-Film Transistor LCD (TFT LCD), an Organic Light Emitting Diode (OLED) display, a flexible display, a 3D display, or an e-ink display.

A touch screen may be configured by forming a multilayered structure with the display unit 251 and the touch input unit 213 or integrating the display unit 251 with the touch input unit 213.

The display unit 251 may be configured as a Head Up Display (HUD). If the display is configured as a HUD, the display unit 251 may be provided with a projection module, and output information by an image projected onto the windshield or a window.

The display unit 251 may include a transparent display. The transparent display may be attached onto the windshield or a window.

The transparent display may display a specific screen with a specific transparency. To have a transparency, the transparent display may include at least one of a transparent Thin Film Electroluminescent (TFFL) display, a transparent OLED display, a transparent LCD, a transmissive transparent display, or a transparent LED display. The transparency of the transparent display is controllable.

Meanwhile, the user interface device200 may include a plurality of display units 251a to 251g.

The display unit 251 may be disposed in an area of the steering wheel, areas 251a, 251b and 251e of the instrument panel, an area 251d of a seat, an area 251f of each pillar, an area 251g of a door, an area of the center console, an area of a head lining, or an area of a sun visor, or may be implemented in an area 251c of the windshield, and an area 251h of a window.

The audio output unit 252 converts an electrical signal received from the processor 270 or the controller 170 to an audio signal, and outputs the audio signal. For this purpose, the audio output unit 252 may include one or more speakers.

The haptic output unit 253 generates a haptic output. For example, the haptic output unit 253 may vibrate the steering wheel, a safety belt, a seat 110FL, 110FR, 110RL, or 110RR, so that a user may perceive the output.

The processor 270 may provide overall control to each unit of the user interface device200.

According to an embodiment, the user interface device200 may include a plurality of processors 270 or no processor 270.

If the user interface device200 does not include any processor 270, the user interface device200 may operate under the control of a processor of another device in the vehicle 100, or under the control of the controller 170.

Meanwhile, the user interface device200 may be referred to as a vehicle display device.

The user interface device200 may operate under the control of the controller 170.

The object detection device 300 is a device used to detect an object outside the vehicle 100. The object detection device 300 may generate object information based on sensing data.

The object information may include information indicating the presence or absence of an object, information about the location of an object, information indicating the distance between the vehicle 100 and the object, and information about a relative speed of the vehicle 100 with respect to the object.

An object may be any of various items related to driving of the vehicle 100.

Referring to FIGS. 5 and 6, objects O may include lanes OB10, another vehicle OB11, a pedestrian OB12, a 2-wheel vehicle OB13, traffic signals OB14 and OB15, light, a road, a structure, a speed bump, topography, an animal, and so on.

The lanes OB10 may include a driving lane, a lane next to the driving lane, and a lane in which an opposite vehicle is driving. The lanes OB10 may conceptually include left and right lines that define each of the lanes.

The other vehicle OB11 may be a vehicle driving in the vicinity of the vehicle 100. The other vehicle OB11 may be located within a predetermined distance from the vehicle 100. For example, the other vehicle OB11 may precede or follow the vehicle 100.

The pedestrian OB12 may be a person located around the vehicle 100. The pedestrian OB12 may be a person located within a predetermined distance from the vehicle 100. For example, the pedestrian OB12 may be a person on a sidewalk or a roadway.

The 2-wheel vehicle OB13 may refer to a transportation means moving on two wheels, located around the vehicle 100. The 2-wheel vehicle OB13 may be a transportation means having two wheels, located within a predetermined distance from the vehicle 100. For example, the 2-wheel vehicle OB13 may be a motorbike or bicycle on a sidewalk or a roadway.

The traffic signals may include a traffic signal lamp OB15, a traffic sign OB14, and a symbol or text drawn or written on a road surface.

The light may be light generated from a lamp of another vehicle. The light may be generated from a street lamp. The light may be sunlight.

The road may include a road surface, a curb, a ramp such as a down-ramp or an up-ramp, and so on.

The structure may be an object fixed on the ground, near to a road. For example, the structure may be any of a street lamp, a street tree, a building, a telephone pole, a signal lamp, and a bridge.

The topography may include a mountain, a hill, and so on.

Meanwhile, objects may be classified into mobile objects and fixed objects. For example, the mobile objects may conceptually include another vehicle and a pedestrian. For example, the fixed objects may conceptually include a traffic signal, a road, and a structure.

The object detection device 300 may include a camera 310, a Radio Detection and Ranging (RADAR) 320, a Light Detection and Ranging (LiDAR) 330, an ultrasonic sensor 340, an Infrared sensor 350, and a processor 370. The components of the object detection device 300 may be separated from or integrated with the afore-described sensing unit 120, structurally and operatively.

According to an embodiment, the object detection device 300 may further include a new component in addition to components described below or may not include a part of the described components.

To acquire a vehicle exterior image, the camera 310 may be disposed at an appropriate position on the exterior of the vehicle 100. The camera 310 may be a mono camera, a stereo camera 310a, Around View Monitoring (AVM) cameras 310b, or a 360-degree camera.

The camera 310 may acquire information about the location of an object, information about a distance to the object, or information about a relative speed with respect to the object by any of various image processing algorithms.

For example, the camera 310 may acquire information about a distance to an object and information about a relative speed with respect to the object in an acquired image, based on a variation in the size of the object over time.

For example, the camera 310 may acquire information about a distance to an object and information about a relative speed with respect to the object through a pin hole model, road surface profiling, or the like.

For example, the camera 310 may acquire information about a distance to an object and information about a relative speed with respect to the object based on disparity information in a stereo image acquired by the stereo camera 310a.

For example, to acquire an image of what lies ahead of the vehicle 100, the camera 310 may be disposed in the vicinity of a front windshield inside the vehicle 100. Or the camera 310 may be disposed around a front bumper or a radiator grill.

For example, to acquire an image of what lies behind the vehicle 100, the camera 310 may be disposed in the vicinity of a rear glass inside the vehicle 100. Or the camera 310 may be disposed around a rear bumper, a trunk, or a tail gate.

For example, to acquire an image of what lies on a side of the vehicle 100, the camera 310 may be disposed in the vicinity of at least one of side windows inside the vehicle 100. Or the camera 310 may be disposed around a side mirror, a fender, or a door.

The camera 310 may provide an acquired image to the processor 370.

The RADAR 320 may include an electromagnetic wave transmitter and an electromagnetic wave receiver. The RADAR 320 may be implemented by pulse RADAR or continuous wave RADAR. The RADAR 320 may be implemented by Frequency Modulated Continuous Wave (FMCW) or Frequency Shift Keying (FSK) as a pulse RADAR scheme according to a signal waveform.

The RADAR 320 may detect an object in TOF or phase shifting by electromagnetic waves, and determine the location, distance, and relative speed of the detected object.

The RADAR 320 may be disposed at an appropriate position on the exterior of the vehicle 100 in order to sense an object ahead of, behind, or beside the vehicle 100.

The LiDAR 330 may include a laser transmitter and a laser receiver. The LiDAR 330 may be implemented in TOF or phase shifting.

The LiDAR 330 may be implemented in a driven or non-driven manner.

If the LiDAR 330 is implemented in a driven manner, the LiDAR 330 may be rotated by a motor and detect an object around the vehicle 100.

If the LiDAR 330 is implemented in a non-driven manner, the LiDAR 330 may detect an object within a predetermined range from the vehicle 100 by optical steering. The vehicle 100 may include a plurality of non-driven LiDARs 330.

The LiDAR 330 may detect an object in TOF or phase shifting by laser light, and determine the location, distance, and relative speed of the detected object.

The LiDAR 330 may be disposed at an appropriate position on the exterior of the vehicle 100 in order to sense an object ahead of, behind, or beside the vehicle 100.

The ultrasonic sensor 340 may include an ultrasonic wave transmitter and an ultrasonic wave receiver. The ultrasonic sensor 340 may detect an object by ultrasonic waves, and determine the location, distance, and relative speed of the detected object.

The ultrasonic sensor 340 may be disposed at an appropriate position on the exterior of the vehicle 100 in order to sense an object ahead of, behind, or beside the vehicle 100.

The Infrared sensor 350 may include an IR transmitter and an IR receiver. The Infrared sensor 350 may detect an object by IR light, and determine the location, distance, and relative speed of the detected object.

The Infrared sensor 350 may be disposed at an appropriate position on the exterior of the vehicle 100 in order to sense an object ahead of, behind, or beside the vehicle 100.

The processor 370 may provide overall control to each unit of the object detection device 300.

The processor 370 may detect or classify an object by comparing data sensed by the camera 310, the RADAR 320, the LiDAR 330, the ultrasonic sensor 340, and the Infrared sensor 350 with pre-stored data.

The processor 370 may detect an object and track the detected object, based on an acquired image. The processor 370 may calculate a distance to the object, a relative speed with respect to the object, and so on by an image processing algorithm.

For example, the processor 370 may acquire information about a distance to an object and information about a relative speed with respect to the object from an acquired image, based on a variation in the size of the object over time.

For example, the processor 370 may acquire information about a distance to an object and information about a relative speed with respect to the object from an image acquired from the stereo camera 310a.

For example, the processor 370 may acquire information about a distance to an object and information about a relative speed with respect to the object from an image acquired from the stereo camera 310a, based on disparity information.

The processor 370 may detect an object and track the detected object based on electromagnetic waves which are transmitted, are reflected from an object, and then return. The processor 370 may calculate a distance to the object and a relative speed with respect to the object, based on the electromagnetic waves.

The processor 370 may detect an object and track the detected object based on laser light which is transmitted, is reflected from an object, and then returns. The sensing processor 370 may calculate a distance to the object and a relative speed with respect to the object, based on the laser light.

The processor 370 may detect an object and track the detected object based on ultrasonic waves which are transmitted, are reflected from an object, and then return. The processor 370 may calculate a distance to the object and a relative speed with respect to the object, based on the ultrasonic waves.

The processor 370 may detect an object and track the detected object based on IR light which is transmitted, is reflected from an object, and then returns. The processor 370 may calculate a distance to the object and a relative speed with respect to the object, based on the IR light.

As described before, once the vehicle 100 starts the learning mode in response to a user input to the input unit 210, the processor 370 may store data sensed by the camera 310, the RADAR 320, the LiDAR 330, the ultrasonic sensor 340, and the Infrared sensor 350.

Each step of the learning mode based on analysis of stored data, and an operating mode following the learning mode will be described later in detail in relation to the operation system 700. According to an embodiment, the object detection device 300 may include a plurality of processors 370 or no processor 370. For example, the camera 310, the RADAR 320, the LiDAR 330, the ultrasonic sensor 340, and the Infrared sensor 350 may include individual processors.

If the object detection device 300 includes no processor 370, the object detection device 300 may operate under the control of a processor of a device in the vehicle 100 or under the control of the controller 170.

The object detection device 300 may operate under the control of the controller 170.

The communication device 400 is used to communicate with an external device. The external device may be another vehicle, a mobile terminal, or a server.

The communication device 400 may include at least one of a transmission antenna and a reception antenna, for communication, and a Radio Frequency (RF) circuit and device, for implementing various communication protocols.

The communication device 400 may include a short-range communication unit 410, a location information unit 420, a Vehicle to Everything (V2X) communication unit 430, an optical communication unit 440, a broadcasting transceiver unit 450, an Intelligent Transport System (ITS) communication unit 460, and a processor 470.

According to an embodiment, the communication device 400 may further include a new component in addition to components described below, or may not include a part of the described components.

The short-range communication module 410 is a unit for conducting short-range communication. The short-range communication module 410 may support short-range communication, using at least one of Bluetooth™, Radio Frequency Identification (RFID), Infrared Data Association (IrDA), Ultra Wideband (UWB), ZigBee, Near Field Communication (NFC), Wireless Fidelity (Wi-Fi), Wi-Fi Direct, or Wireless Universal Serial Bus (Wireless USB).

The short-range communication unit 410 may conduct short-range communication between the vehicle 100 and at least one external device by establishing a wireless area network.

The location information unit 420 is a unit configured to acquire information about a location of the vehicle 100. The location information unit 420 may include at least one of a GPS module or a Differential Global Positioning System (DGPS) module.

The V2X communication unit 430 is a unit used for wireless communication with a server (by Vehicle to Infrastructure (V2I)), another vehicle (by Vehicle to Vehicle (V2V)), or a pedestrian (by Vehicle to Pedestrian (V2P)). The V2X communication unit 430 may include an RF circuit capable of implementing a V2I protocol, a V2V protocol, and a V2P protocol.

The optical communication unit 440 is a unit used to communicate with an external device by light. The optical communication unit 440 may include an optical transmitter for converting an electrical signal to an optical signal and emitting the optical signal to the outside, and an optical receiver for converting a received optical signal to an electrical signal.

According to an embodiment, the optical transmitter may be integrated with a lamp included in the vehicle 100.

The broadcasting transceiver unit 450 is a unit used to receive a broadcast signal from an external broadcasting management server or transmit a broadcast signal to the broadcasting management server, on a broadcast channel. The broadcast channel may include a satellite channel and a terrestrial channel. The broadcast signal may include a TV broadcast signal, a radio broadcast signal, and a data broadcast signal.

The ITS communication unit 460 may exchange information, data, or signals with a traffic system. The ITS communication unit 460 may provide acquired information and data to the traffic system. The ITS communication unit 460 may receive information, data, or a signal from the traffic system. For example, the ITS communication unit 460 may receive traffic information from the traffic system and provide the received traffic information to the controller 170. For example, the ITS communication unit 460 may receive a control signal from the traffic system, and provide the received control signal to the controller 170 or a processor in the vehicle 100.

The processor 470 may provide overall control to each unit of the communication device 400.

According to an embodiment, the communication device 400 may include a plurality of processors 470 or no processor 470.

If the communication device 400 does not include any processor 470, the communication device 400 may operate under the control of a processor of another device in the vehicle 100 or under the control of the controller 170.

Meanwhile, the communication device 400 may be configured along with the user interface device200, as a vehicle multimedia device. In this case, the vehicle multimedia device may be referred to as a telematics device or an Audio Video Navigation (AVN) device.

The communication device 400 may operate under the control of the controller 170.

The maneuvering device 500 is a device used to receive a user command for driving the vehicle 100.

In the manual mode, the vehicle 100 may drive based on a signal provided by the maneuvering device 500.

The maneuvering device 500 may include the steering input device 510, an acceleration input device 530, and a brake input device 570.

The steering input device 510 may receive a driving direction input for the vehicle 100 from a user. The steering input device 510 is preferably configured as a wheel for enabling a steering input by rotation. According to an embodiment, the steering input device 510 may be configured as a touch screen, a touchpad, or a button.

The acceleration input device 530 may receive an input for acceleration of the vehicle 100 from the user. The brake input device 570 may receive an input for deceleration of the vehicle 100 from the user. The acceleration input device 530 and the brake input device 570 are preferably formed into pedals. According to an embodiment, the acceleration input device 530 or the brake input device 570 may be configured as a touch screen, a touchpad, or a button.

The maneuvering device 500 may operate under the control of the controller 170.

The vehicle driving device 600 is a device used to electrically control driving of various devices of the vehicle 100.

The vehicle driving device 600 may include at least one of a power train driving unit 610, a chassis driving unit 620, a door/window driving unit 630, a safety device driving unit 640, a lamp driving unit 650, and an air conditioner driving unit 660.

According to an embodiment, the vehicle driving device 600 may further include a new component in addition to components described below or may not include a part of the components.

Meanwhile, the vehicle driving device 600 may include a processor. Each individual unit of the vehicle driving device 600 may include a processor.

The power train driving unit 610 may control operation of a power train device.

The power train driving unit 610 may include a power source driver 611 and a transmission driver 612.

The power source driver 611 may control a power source of the vehicle 100.

For example, if the power source is a fossil fuel-based engine, the power source driver 610 may perform electronic control on the engine. Therefore, the power source driver 610 may control an output torque of the engine, and the like. The power source driver 611 may adjust the engine output torque under the control of the controller 170.

For example, if the power source is an electrical energy-based motor, the power source driver 610 may control the motor. The power source driver 610 may adjust a rotation speed, torque, and so on of the motor under the control of the controller 170.

The transmission driver 612 may control a transmission.

The transmission driver 612 may adjust a state of the transmission. The transmission driver 612 may adjust the state of the transmission to drive D, reverse R, neutral N, or park P.

If the power source is an engine, the transmission driver 612 may adjust an engagement state of a gear in the drive state D.

The chassis driving unit 620 may control operation of a chassis device.

The chassis driving unit 620 may include a steering driver 621, a brake driver 622, and a suspension driver 623.

The steering driver 621 may perform electronic control on a steering device in the vehicle 100. The steering driver 621 may change a driving direction of the vehicle 100.

The brake driver 622 may perform electronic control on a brake device in the vehicle 100. For example, the brake driver 622 may decrease the speed of the vehicle 100 by controlling an operation of a brake disposed at a tire.

Meanwhile, the brake driver 622 may control a plurality of brakes individually. The brake driver 622 may differentiate braking power applied to a plurality of wheels.

The suspension driver 623 may perform electronic control on a suspension device in the vehicle 100. For example, if the surface of a road is rugged, the suspension driver 623 may control the suspension device to reduce jerk of the vehicle 100.

Meanwhile, the suspension driver 623 may control a plurality of suspensions individually.

The door/window driving unit 630 may perform electronic control on a door device or a window device in the vehicle 100.

The door/window driving unit 630 may include a door driver 631 and a window driver 632.

The door driver 631 may perform electronic control on a door device in the vehicle 100. For example, the door driver 631 may control opening and closing of a plurality of doors in the vehicle 100. The door driver 631 may control opening or closing of the trunk or the tail gate. The door driver 631 may control opening or closing of the sunroof.

The window driver 632 may perform electronic control on a window device in the vehicle 100. The window driver 632 may control opening or closing of a plurality of windows in the vehicle 100.

The safety device driving unit 640 may perform electronic control on various safety devices in the vehicle 100.

The safety device driving unit 640 may include an airbag driver 641, a seatbelt driver 642, and a pedestrian protection device driver 643.

The airbag driver 641 may perform electronic control on an airbag device in the vehicle 100. For example, the airbag driver 641 may control inflation of an airbag, upon sensing an emergency situation.

The seatbelt driver 642 may perform electronic control on a seatbelt device in the vehicle 100. For example, the seatbelt driver 642 may control securing of passengers on the seats 110FL, 110FR, 110RL, and 110RR by means of seatbelts, upon sensing a danger.

The pedestrian protection device driver 643 may perform electronic control on a hood lift and a pedestrian airbag in the vehicle 100. For example, the pedestrian protection device driver 643 may control hood lift-up and inflation of the pedestrian airbag, upon sensing collision with a pedestrian.

The lamp driving unit 650 may perform electronic control on various lamp devices in the vehicle 100.

The air conditioner driving unit 660 may perform electronic control on an air conditioner in the vehicle 100. For example, if a vehicle internal temperature is high, the air conditioner driver 660 may control the air conditioner to operate and supply cool air into the vehicle 100.

The vehicle driving device 600 may include a processor. Each individual unit of the vehicle driving device 600 may include a processor.

The vehicle driving device 600 may operate under the control of the controller 170.

The operation system 700 is a system that controls various operations of the vehicle 100. The operation system 700 may operate in the autonomous mode.

The operation system 700 may include the driving system 710, the park-out system 740, and the park-in system 750.

According to an embodiment, the operation system 700 may further include a new component in addition to components described below or may not include a part of the described components.

Meanwhile, the operation system 700 may include a processor. Each individual unit of the operation system 700 may include a processor.

Meanwhile, the operation system 700 may control driving in the autonomous mode based on learning. In this case, the learning mode and an operating mode based on the premise of completion of learning may be performed. A description will be given below of a method for executing the learning mode and the operating mode by a processor.

The learning mode may be performed in the afore-described manual mode. In the learning mode, the processor of the operation system 700 may learn a driving route and ambient environment of the vehicle 100.

The learning of the driving route may include generating map data for the driving route. Particularly, the processor of the operation system 700 may generate map data based on information detected through the object detection device 300 during driving from a departure to a destination.

The learning of the ambient environment may include storing and analyzing information about an ambient environment of the vehicle 100 during driving and parking. Particularly, the processor of the operation system 700 may store and analyze the information about the ambient environment of the vehicle based on information detected through the object detection device 300 during parking of the vehicle 100, for example, information about a location, size, and a fixed (or mobile) obstacle of a parking space.

The operating mode may be performed in the afore-described autonomous mode. The operating mode will be described based on the premise that the driving route or the ambient environment has been learned in the learning mode.

The operating mode may be performed in response to a user input through the input unit 210, or when the vehicle 100 reaches the learned driving route and parking space, the operating mode may be performed automatically.

The operating mode may include a semi-autonomous operating mode requiring some user's manipulations of the maneuvering device 500, and a full autonomous operating mode requiring no user's manipulation of the maneuvering device 500.

According to an embodiment, the processor of the operation system 700 may drive the vehicle 100 along the learned driving route by controlling the operation system 710 in the operating mode.

According to an embodiment, the processor of the operation system 700 may take out the vehicle 100 from the learned parking space by controlling the park-out system 740 in the operating mode.

According to an embodiment, the processor of the operation system 700 may park the vehicle 100 in the learned parking space by controlling the park-in system 750 in the operating mode.

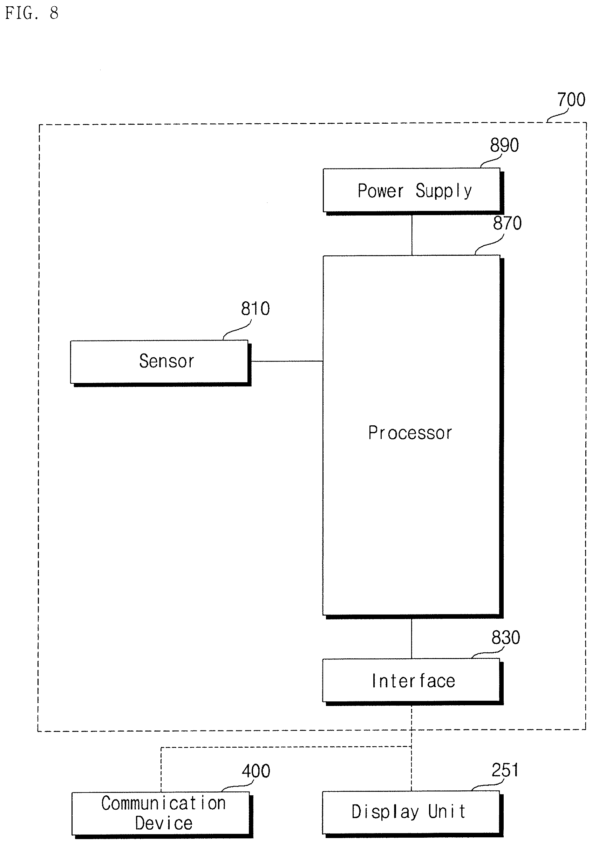

With reference to FIG. 8, a method for executing the learning mode and the operating mode by a processor of the operation system 700 according to an embodiment of the present disclosure will be described below.

According to an embodiment, if the operation system 700 is implemented in software, the operation system 700 may lie under the controller 170 in concept.

According to an embodiment, the operation system 700 may conceptually include at least one of the user interface device200, the object detection device 300, the communication device 400, the maneuvering device 500, the vehicle driving device 600, the navigation system 770, the sensing unit 120, or the controller 170.

The driving system 710 may drive of the vehicle 100.

The driving system 710 may drive of the vehicle 100 by providing a control signal to the vehicle driving device 600 based on navigation information received from the navigation system 770.

The driving system 710 may drive the vehicle 100 by providing a control signal to the vehicle driving device 600 based on object information received from the object detection device 300.

The driving system 710 may drive the vehicle 100 by receiving a signal from an external device through the communication device 400 and providing a control signal to the vehicle driving device 600.

Conceptually, the driving system 710 may be a system that drives the vehicle 100, including at least one of the user interface device200, the object detection device 300, the communication device 400, the maneuvering device 500, the vehicle driving device 600, the navigation system 770, the sensing unit 120, or the controller 170.

The driving system 710 may be referred to as a vehicle driving control device.

The park-out system 740 may perform park-out of the vehicle 100.

The park-out system 740 may perform park-out of the vehicle 100 by providing a control signal to the vehicle driving device 600 based on navigation information received from the navigation system 770.

The park-out system 740 may perform park-out of the vehicle 100 by providing a control signal to the vehicle driving device 600 based on object information received from the object detection device 300.

The park-out system 740 may perform park-out of the vehicle 100 by receiving a signal from an external device through the communication device 400 and providing a control signal to the vehicle driving device 600.

Conceptually, the park-out system 740 may be a system that performs park-out of the vehicle 100, including at least one of the user interface device200, the object detection device 300, the communication device 400, the maneuvering device 500, the vehicle driving device 600, the navigation system 770, the sensing unit 120, or the controller 170.

The park-out system 740 may be referred to as a vehicle park-out control device.

The park-in system 750 may perform park-in of the vehicle 100.

The park-in system 750 may perform park-in of the vehicle 100 by providing a control signal to the vehicle driving device 600 based on navigation information received from the navigation system 770.

The park-in system 750 may perform park-in of the vehicle 100 by providing a control signal to the vehicle driving device 600 based on object information received from the object detection device 300.

The park-in system 750 may perform park-in of the vehicle 100 by receiving a signal from an external device through the communication device 400 and providing a control signal to the vehicle driving device 600.

Conceptually, the park-in system 750 may be a system that performs park-in of the vehicle 100, including at least one of the user interface device200, the object detection device 300, the communication device 400, the maneuvering device 500, the vehicle driving device 600, the navigation system 770, the sensing unit 120, or the controller 170.

The park-in system 750 may be referred to as a vehicle park-in control device.

The navigation system 770 may provide navigation information. The navigation information may include at least one of map information, set destination information, route information based on setting of a destination, information about various objects on a route, lane information, or information about a current location of a vehicle.

The navigation system 770 may include a memory and a processor. The memory may store navigation information. The processor may control operation of the navigation system 770.

According to an embodiment, the navigation system 770 may receive information from an external device through the communication device 400 and update pre-stored information using the received information.

According to an embodiment, the navigation system 770 may be classified as a lower-layer component of the user interface device200.

FIG. 8 is a block diagram of an operation system according to an embodiment of the present disclosure.

Referring to FIG. 8, the operation system 700 may include at least one sensor 810, an interface 830, a processor 870, and a power supply 890.

According to an embodiment, the operation system 700 may further include a new component in addition to components described in the present disclosure, or may not include a part of the described components.

The operation system 700 may include the processor 870. Each individual unit of the operation system 700 may include a processor.

The at least one sensor 810 may be controlled by the processor 870 so that the at least one sensor 810 may sense an object around the vehicle 100.

The at least one sensor 810 may include at least one of a camera, a RADAR, a LiDAR, an ultrasonic sensor, or an infrared sensor.

The at least one sensor 810 may be at least one of the components of the object detection device 300.

The at least one sensor 810 may sense an object around the vehicle 100 driving in a first section.

The at least one sensor 810 may provide the processor 870 with sensing data about the object around the vehicle 100 driving in the first section.

Alternatively or additionally, the at least one sensor 810 may provide the processor of the object detection device 300 with the sensing data about the object around the vehicle 100 driving in the first section.

The interface 830 may serve paths to various types of external devices connected to the operation system 700. The interface 830 may exchange information, signals, or data with another device included in the vehicle 100. The interface 830 may transmit the received information, signal, or data to the processor 870. The interface 830 may transmit information, a signal, or data generated or processed by the processor 870 to another device included in the vehicle 100.

The interface 830 may be identical to the interface 130. The interface 830 may be included in the operation system 700, separately from the interface 130. The interface 830 may serve as paths to various types of external devices connected to the vehicle 100.

The processor 870 may provide overall control to each component of the operation system 700.

The processor 870 may execute the learning mode and the operating mode.

The processor 870 may be implemented using at least one of an ASIC, a DSP, a DSPD, a PLD, an FPGA, a processor, a controller, a micro-controller, a microprocessor, or an electrical unit for executing other functions.

Further, each of the sensing unit 120, the interface 130, the memory 140, the power supply 190, the user interface device200, the object detection device 300, the communication device 400, the maneuvering device 500, the vehicle driving device 600, the operation system 700, and the navigation system 770 may have a processor or may be integrated into the controller 170.

The description of the processor of the operation system 700 may be applied to the processor 870.

The processor 870 may control the at least one sensor 810 to sense an object around the vehicle 100 driving in a first section.

The first section may be a section spanning from a point where the learning mode of the vehicle 100 is initiated and thus sensed data starts to be stored to a point where the learning mode ends.

The first section may be at least a part of a driving route of the vehicle 100.

The processor 870 may generate first object information based on sensing data about the object around the vehicle 100 driving in the first section, received from the at least one sensor 810.

The processor 870 may receive, from the object detection device 300, the first object information based on the sensing data about the object around the vehicle 100 driving in the first section.

The first object information may include object location information and object shape information.

The object location information may be information about the location of the object in geographical coordinates. The object location information may include 3D coordinates in a 3D space.

The object shape information may be information about a 3D shape of the object. The object shape information may be generated by processing stereo image information.

The stereo image information may be acquired by subjecting information detected by a stereo camera to image processing.

The stereo image information may be acquired by subjecting a plurality of images capture by a camera to image processing. In this case, the image processing may be performed by a disparity image processing technique.

The first object information may include fixed object information and mobile object information.

A fixed object refers to an object fixed at a certain position, distinguishable from a mobile object.

Fixed objects may include a road, a traffic sign, a median strip, a curbstone, a barrier, and so on.

The processor 870 may store location information about the first section.

The location information about the first section may be geographical information about the starting point and ending point of the first section.

The location information about the first section may include location information about the point where the learning mode of the vehicle 100 is initiated and thus sensed data starts to be stored, and the point where the learning mode ends.

The processor 870 may determine whether the vehicle 100 is driving in a section where the vehicle 100 has ever driven, based on the location information about the first section.

The processor 870 may store location information about a section in which an object around the vehicle 100 has been sensed during driving of the vehicle 100.

The location information about the section may be geographical information about a learning starting point and a learning ending point.

The processor 870 may store fixed object information based on the sensed first object information.

The first object information may include fixed object information and mobile object information.

A fixed object refers to an object fixed at a certain position, distinguishable from a mobile object.

Fixed objects may include a road, a traffic sign, a median strip, a curbstone, a barrier, and so on.

The fixed object information is information about a fixed object, which may include 3D location information and 3D shape information about the fixed object.

The fixed object information may include information indicating whether the fixed object is fixed at a position but changes in at least one of shape or color.

The processor 870 may generate the fixed object information based on data received from the at least one sensor 810.

In another embodiment, the fixed object information may be generated by the object detection device 300 and then provided to the processor 870.

In another embodiment, the processor 870 may generate the fixed object information based on data received from the navigation system 770.

In another embodiment, the processor 870 may generate the fixed object information based on data received from another vehicle through the communication device 400.

The processor 870 may receive information about an object around one other vehicle which the other vehicle has sensed during driving in the first section from the other vehicle through the communication device 400.

The operation system 700 configured as described above may be advantageous in that the operation system 700 generates a driving route based on information received from another other vehicle even for a route in which the vehicle 100 has never driven before.

The processor 870 may generate a driving route based on at least one of the fixed object information or second object information sensed in a secondary sensing step by comparing the fixed object information with the second object information.

The processor 870 may store the fixed object information based on the first object information sensed by the at least one sensor 810, and then generate a driving route based on at least one of the fixed object information or second object information sensed by the at least one sensor 810 by comparing the fixed object information with the second object information.

The second object information may be sensed later than the first object information by the at least one sensor 810.

A plurality of steps for sensing an object around the vehicle 100 driving in the first section may include a primary sensing step followed in time by a secondary sensing step.

In an embodiment of the present disclosure, the processor 870 may generate the second object information based on sensing data about an object around the vehicle 100 driving in the first section, received from the at least one sensor 810.

In another embodiment of the present disclosure, the processor 870 may receive, from the object detection device 300, the second object information generated based on the sensing data about the object around the vehicle 100 driving in the first section.

For example, the processor 870 may generate map data by combining the fixed object information with the second object information. The processor 870 may generate a driving route based on the generated map data.

The second object information may include object location information and object shape information.

The second object information may include fixed object information and mobile object information.

The vehicle 100 may drive in the autonomous mode or the manual mode along the generated driving route.

For example, the vehicle 100 may drive in the autonomous mode in a part of the generated driving route, and in the manual mode in another part of the driving route.

When the vehicle 100 drives in the autonomous mode, the processor 870 may control the vehicle driving device 600 so that the vehicle 100 may drive in the generated driving route.

The processor 870 may update the stored fixed object information based on the second object information, and store the updated fixed object information.

The processor 870 may determine whether there is any part of the second object information identical to the stored fixed object information by comparing the second object information with the stored fixed object information.

The processor 870 may update and store the stored fixed object information based on a result of the determination of whether there is any part of the second object information identical to the stored fixed object information.

According to an embodiment of the present disclosure, the processor 870 may not store a part of the second object information identical to the stored fixed object information in the memory 140. In this case, the processor 870 may store information about the number of repeated sensings of each fixed object in the memory 140.

The information about the number of repeated sensings of each fixed object may be included in the fixed object information.

According to another embodiment of the present disclosure, the processor 870 may store a part of the second object information identical to the fixed object information in the memory 140.

The processor 870 may determine the number of repeated sensings of each fixed object based on the updated fixed object information.

The information about the number of repeated sensings of each fixed object may be included in the updated fixed object information.

The number of repeated sensings of each fixed object may be calculated based on the updated fixed object information by the processor 870.

The processor 870 may delete information about an object sensed fewer times than a predetermined value in the updated fixed object information from the memory 140.

The operation system 700 configured as described above is advantageous in that the memory 140 may be effectively managed and the performance of the operation system 700 may be increased, through deletion of unnecessary information.

The processor 870 may control the display unit 251 to output an image of an object.

The display 870 may control the display unit 251 to output an image based on fixed object information.

The processor 870 may generate mobile object information based on the second object information.

The processor 870 may control the display unit 251 to output an image based on the mobile object information, overlapped with the image based on the fixed object information.

The power supply 80 may supply power required for operation of each component under the control of the processor 870. Particularly, the power supply 890 may receive power from a battery or the like in the vehicle 100.

The power supply 890 may be the power supply 190. The power supply 890 may be provided in the operation system 700, separately from the power supply 190.

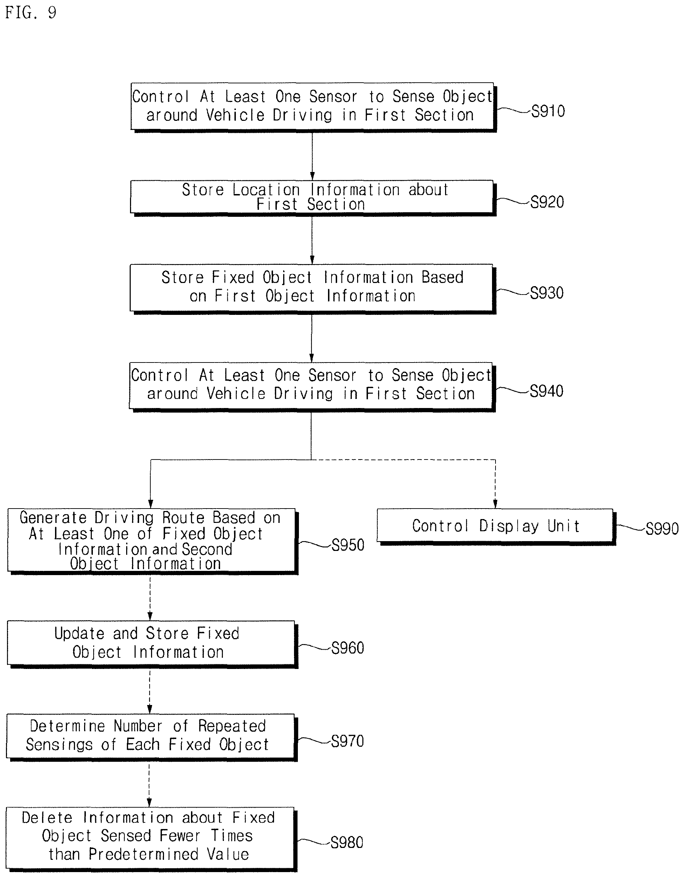

FIG. 9 is a flowchart illustrating an operation of the operation system according to an embodiment of the present disclosure.

With reference to FIG. 9, a method for executing the learning mode and the operating mode by the processor 870 will be described below.

The processor 870 may control the at least one sensor 810 to sense an object around the vehicle 100 driving in a first section (S910).

The processor 870 may receive sensing data about the object around the vehicle 100 driving in the first section.

The processor 870 may generate first object information based on the sensing data about the object around the vehicle 100 driving in the first section.

In another embodiment, the processor 870 may receive, from the object detection device 300, the first object information based on the sensing data about the object around the vehicle 100 driving in the first section.

In another embodiment, the processor 870 may generate the first object information in a step S930 for storing fixed object information.

The processor 870 may store location information about the first section (S920).

The processor 870 may store location information about a section in which an object around the vehicle 100 has been sensed during driving of the vehicle 100.

The processor 870 may determine whether a route in which the vehicle 100 is to drive is included in a previously driven route, based on the location information about the first section.

In another embodiment, the processor 870 may store the location information about the first section after storing the fixed object information in step S930.

In another embodiment, the processor870 may determine whether a route in which the vehicle 100 is to drive is included in a previously driven route, based on the stored fixed object information without storing the location information about the first section.

According to an embodiment, the processor 870 may not perform the step S920 for storing the location information about the first section.

The processor 870 may store fixed object information based on the first object information sensed in the primary sensing step S910 (S930).

The processor 870 may generate the fixed object information based on data received from the at least one sensor 810.

In another embodiment, the fixed object information may be generated by the object detection device 300 and provided to the processor 870.

In another embodiment, the processor 870 may generate the fixed object information based on data received from the navigation system 770.

In another embodiment, the processor 870 may generate the fixed object information based on data received from another vehicle through the communication device 850.

The step S930 for storing the fixed object information will be described later in greater detail.

The processor 870 may control the at least one sensor 810 to sense an object around the vehicle 100 driving in the first section (S940).

A plurality of steps for sensing an object around the vehicle 100 driving in the first section may be defined as the primary sensing step S910 executed earlier than the secondary sensing step S940.

In an embodiment of the present disclosure, the processor 870 may receive information about an object around one other vehicle from the other vehicle during driving of the other vehicle in the first section, through the communication device 400.

The operation system 700 configured as described above is advantageous in that the operation system 700 may generate a driving route based on information received from another vehicle, even for a route in which the vehicle 100 has never driven.

The description of the primary sensing step S910 may be applied to the secondary sensing step S940.

The processor 870 may generate a driving route based on at least one of the fixed object information or the second object information sensed in the secondary sensing step S940 by comparing the fixed object information with the second object information (S950).

In an embodiment of the present disclosure, the processor 870 may receive sensing data about an object around the vehicle 100 driving in the first section from the at least one sensor 810. The processor 870 may generate second object information based on the sensing data about the object around the vehicle 100.

In another embodiment of the present disclosure, the object detection device 300 may generate the second object information based on the sensing data about the object around the vehicle 100 driving in the first section. The processor 870 may receive the generated second object information from the object detection device 300.

The processor 870 may generate map data by combining the fixed object information with the second object information. The processor 870 may generate a driving route based on the generated map data.

The step S950 for generating a driving route will be described below in greater detail.

The processor 870 may control the vehicle 100 to drive along the generated driving route in the autonomous mode or the manual mode.

For example, the processor 870 may control the vehicle 100 to drive in the autonomous mode in a part of the generated driving route, and in the manual mode in another part of the driving route.

When the vehicle 100 drives in the autonomous mode, the processor 870 may control the vehicle driving device 600 so that the vehicle 100 may drive in the generated driving route.

The processor 870 may update the stored fixed object information based on the second object information, and store the updated fixed object information (S960).

The processor 870 may determine whether there is any part of the second object information identical to the stored fixed object information by comparing the second object information with the stored fixed object information.

The processor 870 may update and store the stored fixed object information based on a result of the determination of whether there is any part of the second object information identical to the stored fixed object information.

The processor 870 may determine the number of repeated sensings of each fixed object based on the updated fixed object information (S970).

The processor 870 may determine whether the number of repeated sensings of each fixed object is equal to or larger than a predetermined value, based on information about the number of repeated sensings of each fixed object, included in the fixed object information.

Alternatively or additionally, the processor 870 may determine whether the number of repeated sensings of each fixed object is equal to or larger than the predetermined value, based on prior-update information and post-update information included in the fixed object information.

The processor 870 may delete information about an object sensed fewer times than the predetermined value in the updated fixed object information from the memory 140 (S980).

The operation system 700 configured as described above is advantageous in that the memory 140 may be effectively managed and the performance of the operation system 700 may be increased, through deletion of unnecessary information.

The processor 870 may control the display unit 251 to output an image of an object (S990).

The display 870 may control the display unit 251 to output an image based on the fixed object information.

The processor 870 may generate mobile object information based on the second object information.

The processor 870 may control the display unit 251 to output an image based on the mobile object information, overlapped with the image based on the fixed object information.

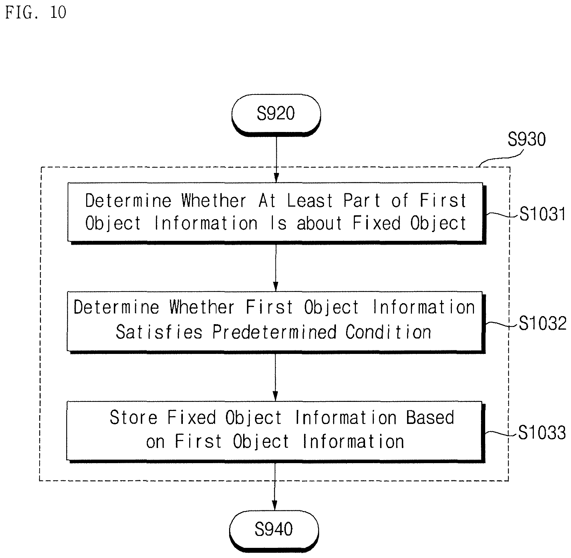

FIG. 10 is a flowchart illustrating the step S930 for storing fixed object information, illustrated in FIG. 9.

The processor 870 may receive a sensing signal about an object from the at least one sensor 810.

The processor 870 may receive first object information from the object detection device 300.

The processor 870 may determine whether at least a part of the first object information is fixed object information (S1031).

The processor 870 may store the fixed object information based on a result of the determination of whether at least a part of the first object information is fixed object information.

The processor 870 may determine whether the first object information includes fixed object information based on an object shape.

The object shape may refer to information about the 3D shape of an object. The information about the 2D shape of the object may be obtained by subjecting images captured by one or more cameras to image processing.

The processor 870 may extract information about an object matching a fixed object shape from the first object information based on information about fixed objects, pre-stored in the memory 140.

The processor 870 may determine whether the information about the object is fixed object information based on object motion information.

The object motion information may be generated by subjecting images of the object captured at a plurality of time points to image processing by the processor 870.

The object motion information may be included in the first object information.

The object motion information may be generated by the object detection device 300 and provided to the processor 870.

The processor 870 may determine whether the object is a fixed object having a shape changing in time, based on the object motion information.

Fixed objects having shapes changing in time may include a barrier at the entrance of a parking lot, a barricade, a temporary barrier, a drawbridge, a railroad crossing, and so on.

The processor 870 may determine whether the first object information satisfies a predetermined condition regarding the quality of sensed information by comparing the first object information with pre-stored reference information (S1032).

For example, the processor 870 may determine whether the first object information satisfies the predetermined condition, based on at least one of a noise amount, an image clarity, or an image brightness.

The processor 870 may determine whether the first object information satisfies the predetermined condition by comparing the pre-stored reference information with the first object information.

The pre-stored reference information may be stored object information which has been generated when an ambient environment of the vehicle 100 satisfied the predetermined condition. For example, the processor 870 may set object information generated based on an image captured in the daytime when the weather around the vehicle 100 is clear, as reference information.

Besides the above examples, the processor 870 may determine whether the first object information satisfies a predetermined condition including an index related to the quality of information sensed by the at least one sensor 810.

The processor 870 may store fixed object information based on the first object information (S1033).

The processor 870 may store first object information which is fixed object information and is determined to satisfy the predetermined condition.

The processor 870 may store the fixed object information based on a result of the determination of whether the first object information is fixed object information.

If determining that the first object information satisfies the predetermined condition, the processor 870 may store the fixed object information based on the first object information.

The processor 870 may store only a part of the first object information, which is fixed object information and which is determined to satisfy the predetermined condition.

The processor 870 may not store information out of the first object information, which is not fixed object information or which is determined not to satisfy the predetermined condition.

For example, first object information sensed when it rains or snows may be incorrect. In this case, the processor 870 may not store the first object information, when determining that the vehicle 100 is in a bad weather such as a cloudy, rainy, or snowy weather, based on information received from the object detection device 300.

For example, if determining based on the first object information that the first object information has been sensed at or below a predetermined brightness level, the processor 870 may not store the first object information.

For example, if determining that first object information sensed by a plurality of sensors do not match each other, the processor 870 may not store the first object information.

The operation system 700 configured as described above is advantageous in that a driving route may be generated fast by selectively storing fixed object information out of sensed first object information.

Further, the operation system 700 may increase the quality and accuracy of stored information by selectively storing information satisfying a predetermined condition out of sensed first object information. Therefore, the operation system 700 may advantageously generate a safe driving route.

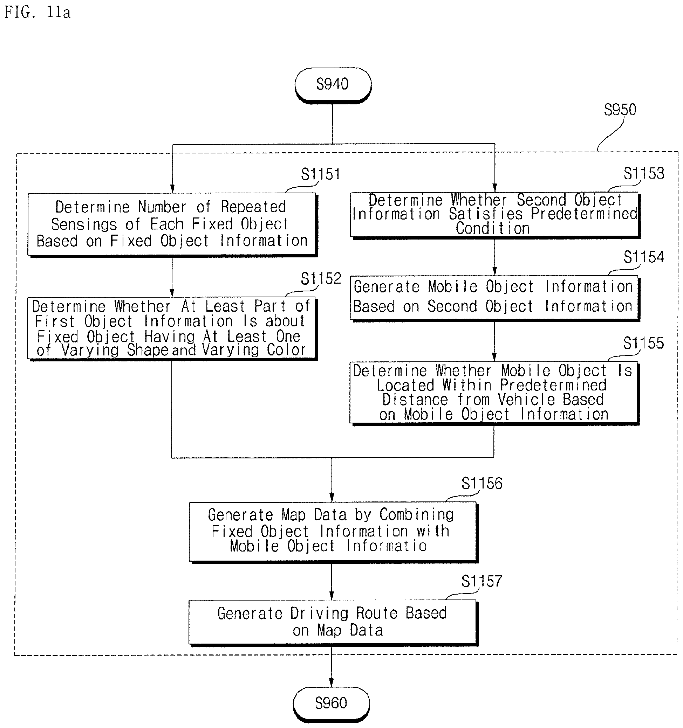

FIG. 11A is a flowchart illustrating the step S950 for generating a driving route, illustrated in FIG. 9.

The processor 870 may determine the number of repeated sensings of each object based on updated fixed object information (S1151).

The processor 870 may read information about the number of repeated sensings of each object, included in the fixed object information.

The processor 870 may generate a driving route based on information about a fixed object which has been sensed repeatedly a predetermined number of or more times in the updated fixed object information, and second object information.

The processor 870 may not use information about a fixed object which has been sensed repeatedly fewer times than the predetermined number in the updated fixed object information, in generating map data.

According to an embodiment, the processor 870 may omit the step S1151 for determining the number of repeated sensings of each fixed object.

The processor 870 may determine whether at least a part of the fixed object information is information about a fixed object having at least one of a varying shape and a varying color (S1152).

The processor 870 may determine whether an object is a fixed object having at least one of a varying shape and a varying color, based on object shape information.

The object shape information may be information about a 2D shape of an object, which may be generated by processing image data of a black and white camera or a mono camera.

The object shape information may be information about a 3D shape of an object, which may be generated by processing stereo image data.

The processor 870 may determine whether an object is a fixed object having at least one of a varying shape and a varying color by comparing pre-stored object shape information with shape information about the sensed object.

The processor 870 may determine whether an object is a fixed object having at least one of a varying shape and a varying color based on object motion information about the object.

The object motion information may be generated based on data of the specific object sensed at different time points by the processor 870.

The object motion information may be generated based on data of the specific object sensed at different time points by the processor 870 and included in the first object information.

The object motion information may be generated based on data of the specific object sensed at different time points by the object detection device 300 and provided to the processor 870.

Fixed objects having at least one of a varying shape and a varying color may include a barrier at the entrance of a parking lot, a barricade, a temporary barrier, a drawbridge, a railroad crossing, and so on.

Regarding a fixed object having at least one of a varying shape and a varying color, the processor 870 may generate map data based on second object information.

Regarding a fixed object having at least one of a varying shape and a varying color, the processor 870 may generate map data using fixed object information for object location information and second object information for object shape information.

According to an embodiment, the processor 870 may omit the step S1152 for determining whether at least a part of fixed object information is information about a fixed object having at least one of a varying shape and a varying color.

The processor 870 may determine whether the second object information satisfies a predetermined condition regarding the quality of sensed information by comparing the second object information with pre-stored reference information (S1153).

The processor 870 may determine whether the second object information satisfies a predetermined condition including at least one of a noise amount, an image clarity, or an image brightness.

For example, data sensed when it rains or snows may be incorrect. In this case, when determining that the vehicle 100 is in a bad weather such as a cloudy, rainy, or snowy weather, based on information received from the object detection device 300, the processor 870 may generate map data based on the stored fixed object information.

Besides the above examples, the processor 870 may determine whether the second object information satisfies a predetermined condition including an index related to information quality.

If determining that the second object information does not satisfy the predetermined condition regarding the quality of sensed information, the processor 870 may not use the second object information.

The processor 870 may generate map data using second object information determined to satisfy the predetermined condition regarding the quality of sensed information.

According to an embodiment, the processor 870 may omit the step S1153 for determining whether second object information satisfies a predetermined condition regarding the quality of sensed information.

The processor 870 may generate mobile object information based on the second object information (S1154).

The second object information may include fixed object information and mobile object information.

The second object information may include object location information and object shape information.

A fixed object refers to an object fixed at a certain position, distinguishable from a mobile object.

Mobile object information is information about a mobile object, which may include information about a 3D location and a 3D shape of the mobile object.

The processor 870 may generate mobile object information by extracting only information determined to be information about a mobile object from the second object information.

The processor 870 may determine whether an object is a mobile object based on object shape information about the object.

The processor 870 may determine whether an object is a mobile object based on object motion information about the object.

The object motion information may be generated based on data of the specific object sensed at different time points by the processor 870.

The object motion information may be generated based on data of the specific object sensed at different time points by the processor 870 and included in the second object information.

The object motion information may be generated based on data of the specific object sensed at different time points by the object detection device 300 and provided to the processor 870.

According to an embodiment, the processor 870 may omit the step S1154 for generating mobile object information based on second object information. In this case, the processor 870 may generate map data by combining the fixed object information with the second object information.

The processor 870 may determine whether a mobile object is located within a predetermined distance from the vehicle 100 based on the generated mobile object information (S1155) .

If determining that a mobile object is located within the predetermined distance from the vehicle 100, the processor 870 may generate map data based on the second object information.

If determining that a mobile object is located within the predetermined distance from the vehicle 100, the processor 870 may generate map data based on the mobile object information.

If determining that no mobile object is located within the predetermined distance from the vehicle 100, the processor 870 may generate map data by combining the fixed object information with the mobile object information.

For example, if determining that a mobile object is located within the predetermined distance from the vehicle 100, the processor 870 may generate temporary map data only based on the mobile object information. If a mobile object is located apart from the vehicle 100 by the predetermined distance or more, the processor 870 may generate final map data by combining the fixed object information with the mobile object information.

As the operation system 700 configured as described above generates temporary partial map data so as to avoid collision with a mobile object and then generates full map data, the operation system 700 may increase driving safety.

If determining that a mobile object is located within the predetermined distance from the vehicle 100, the processor 870 may generate map data based on the mobile object information, for a predetermined area including the mobile object.

The processor 870 may generate map data by combining the fixed object information with the mobile object information, for another area that does not include a mobile object within the predetermined distance.

As the operation system 700 configured as described above differentiates a map data generation speed for areas, the operation system 700 may efficiently deal with an adjacent object during driving, thereby increasing driving safety.

According to an embodiment, the processor 870 may omit the step S1155 for determining whether a mobile object is located within a predetermined distance from the vehicle 100.

The processor 870 may generate map data by combining the fixed object information with the mobile object information (S1156).

The processor 870 may generate map data by combining the fixed object information with the mobile object information based on object location information.

For example, before sensing the second object information, the processor 870 may generate temporary map data based on the fixed object information.

For example, the processor 870 may receive second object information sensed during driving of the vehicle 100 based on the temporary map data from the at least one sensor 810.

For example, the processor 870 may generate final map data by combining mobile object information based on the sensed second object information with the temporary map data.

As the operation system 700 configured as described above primarily generates a driving route for the vehicle 100 based on stored information and then secondarily fine-adjusts the driving route based on information sensed during driving of the vehicle 100, the operation system 700 may advantageously generate an accurate driving route fast.

The processor 870 may generate a driving route based on the map data (S1157).

The processor 870 may generate a driving route based on at least one of the fixed object information or the second object information sensed in the secondary sensing step by comparing the fixed object information with the second object information.

For example, if determining that there is no mobile object within a predetermined distance, the processor 870 may generate a driving route based on the fixed object information and the second object information.

For example, if determining that a mobile object is located within the predetermined distance, the processor 870 may generate a driving route based on the second object information, for a predetermined area including the mobile object.

For example, the processor 870 may generate a driving route based on the second object information, regarding a fixed object having at least one of a varying shape or and a varying color.

For example, the processor 870 may generate at least a part of the driving rout including an area where the fixed object having at least one of a varying shape and a varying color is located based on the second object information.

For example, the processor 870 may generate at least a part of the driving route based on the second object information when the at least a part of the driving route is generated for an area within a certain distance from the fixed object having at least one of a varying shape and a varying color.

For example, if the second object information satisfies a predetermined condition, the processor 870 may generate a driving route based on the fixed object information and the second object information.

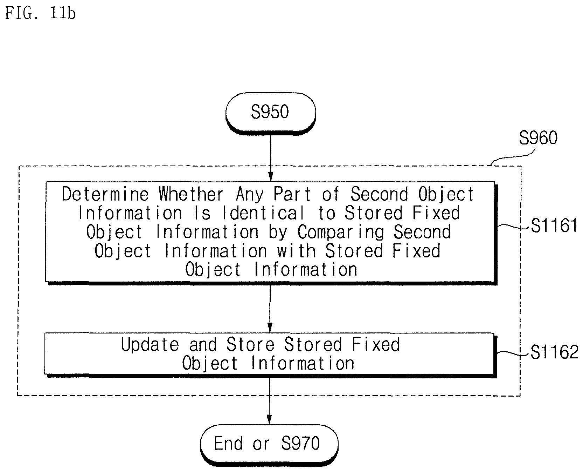

FIG. 11B is a flowchart illustrating the step S960 for updating and storing fixed object information, illustrated in FIG. 9.

The processor 870 may determine whether any part of the second object information is identical to the stored fixed object information by comparing the second object information with the stored fixed object information (S1161).

The processor 870 may compare the second object information with the stored fixed object information based on object location information and object shape information.

If determining that the fixed object information and the second object information are not information about objects at the same location as a result of comparing the second object information with the stored fixed object information based on the object location information, the processor 870 may determine the second object information to be new information.

If determining that the fixed object information and the second object information are information about objects at the same location as a result of comparing the second object information with the stored fixed object information based on the object location information, the processor 870 may further compare the second object information with the stored fixed object information based on the object shape information.

If determining that the fixed object information and the second object information are not information about objects of the same shape as a result of comparing the second object information with the stored fixed object information based on the object shape information, the processor 870 may determine the second object information to be new information.

If determining that the fixed object information and the second object information are information about objects of the same shape as a result of comparing the second object information with the stored fixed object information based on the object shape information, the processor 870 may determine that the second object information is note new information.

The processor 870 may update and store the fixed object information based on a result of determining whether there is any part of the second object information identical to the fixed object information (S1162).

According to an embodiment of the present disclosure, the processor 870 may not store, in the memory 140, information identical to the stored fixed object information in the second object information. In this case, the processor 870 may store information about the number of repeated sensings of each fixed object in the memory 140.

The information about the number of repeated sensings of each fixed object may be included in the fixed object information.

The processor 870 may store, in the memory 140, information different from the stored fixed object information in the second object information.

The processor 870 may store, in the memory 140, information about a new fixed object in the second object information, which is identical to the stored fixed object information in terms of object location information but different from the stored fixed object information in terms of object shape information.

The processor 870 may update the fixed object information by overwriting the information about the new fixed object on the existing fixed object information.

The processor 870 may update the fixed object information by storing the information about the new fixed object together with the existing fixed object information.

According to another embodiment of the present disclosure, the processor 870 may store, in the memory 140, information identical to the stored fixed object information in the second object information.

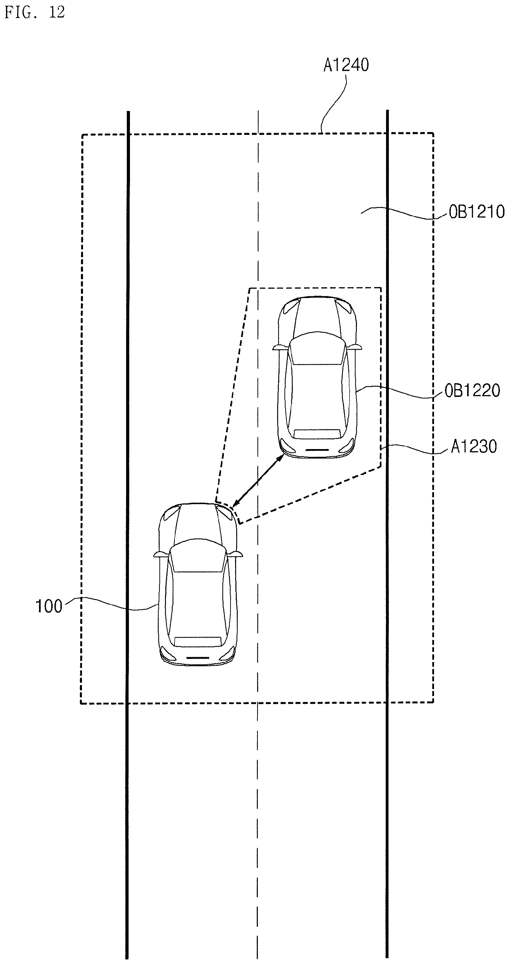

FIG. 12 is a view illustrating an operation system according to an embodiment of the present disclosure.

The processor 870 may control the at least one sensor 810 to sense an object around the vehicle 100 driving in a first section.

The processor 870 may generate mobile object information based on sensed object information.

The sensed object information may include fixed object information and mobile object information.

For example, the processor 870 may generate the mobile object information by extracting only information determined to be information about a mobile object from the sensed object information.

The processor 870 may determine whether information about an object is fixed object information based on object shape information about the object.

The processor 870 may determine whether the information about the object is fixed object information based on object motion information about the object.

The processor 870 may generate map data by combining the stored fixed object information with the generated mobile object information.

For example, the processor 870 may generate map data by combining the fixed object information with the mobile object information based on object location information.

The processor 870 may determine whether a mobile object is located within a predetermined distance from the vehicle 100 based on the generated mobile object information.

If determining that no mobile object is located within the predetermined distance from the vehicle 100, the processor 870 may generate map data based on the fixed object information.

For example, if determining that a mobile object is located within the predetermined distance from the vehicle 100, the processor 870 may generate map data based on the sensed object information.

If determining that a mobile object is located within the predetermined distance from the vehicle 100, the processor 870 may generate map data based on the mobile object information.

Referring to FIG. 12, if determining that one other vehicle OB1220 is located within a predetermined distance from the vehicle 100, the processor 870 may generate map data based on mobile object information, for an area A1230 including the other vehicle OB1220.

In this case, the processor 870 may generate map data based on fixed object information, for another area A1240 that does not include the other vehicle OB1220.

On the other hand, the processor 870 may generate map data based on the fixed object information, for the area A1230 including the other vehicle OB1220 and the area A1240 that does not include the other vehicle OB1220.

In this case, the processor 870 may supplement map data based on the fixed object information according to mobile object information, for the area A1230 including the other vehicle OB1220.

The operation system 700 configured as described above generates map data fast based on stored fixed object information. Herein, the operation system 700 generates the map data based on mobile object information sensed in the presence of an object within a predetermined distance from the vehicle 100. Therefore, the operation system 700 may efficiently deal with an adjacent object during driving, thereby increasing driving safety.

In another embodiment, if determining that a mobile object is located within the predetermined distance from the vehicle 100, the processor 870 may generate temporary map data only based on the mobile object information.

In this case, if a mobile object is located apart from the vehicle 100 by the predetermined distance or more, the processor 870 may generate final map data by combining the fixed object information with the mobile object information.

As the operation system 700 configured as described above generates temporary partial map data so as to avoid collision with a mobile object and then generates full map data, the operation system 700 may increase driving safety.

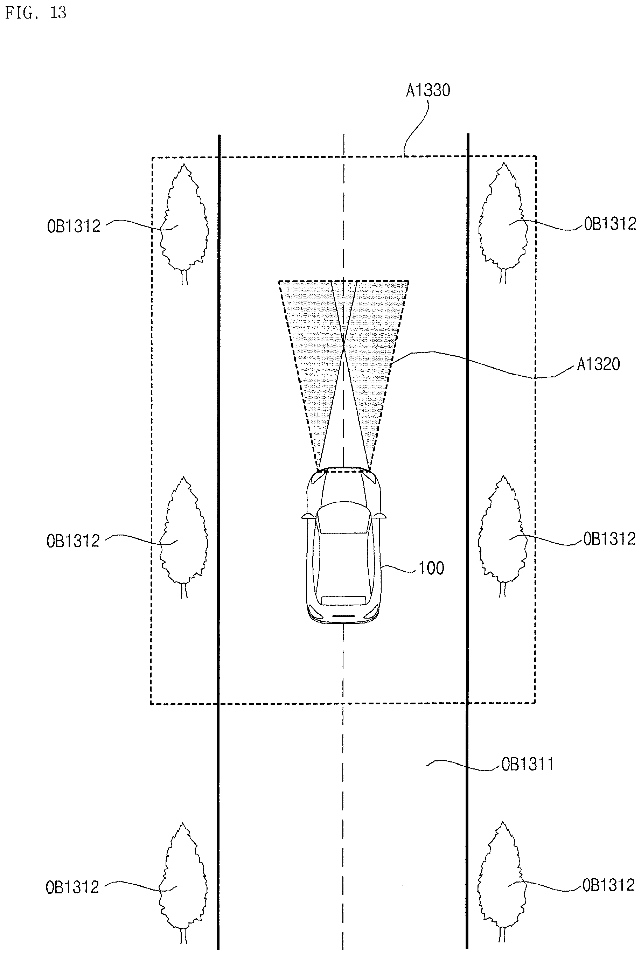

FIG. 13 is a view illustrating an operation system according to an embodiment of the present disclosure.

The processor 870 may control the at least one sensor 810 to sense an object around the vehicle 100 driving in a first section.

The processor 870 may generate mobile object information based on sensed object information.

The sensed object information may include fixed object information and mobile object information.

For example, the processor 870 may generate the mobile object information by extracting only information determined to be information about a mobile object from the sensed object information.

The processor 870 may determine whether information about an object is mobile object information based on object shape information about the object.

The processor 870 may determine whether the information about the object is mobile object information based on object motion information about the object.

The processor 870 may generate map data based on fixed object information and the mobile object information.

The processor 870 may generate map data by combining the fixed object information with the mobile object information, based on the object location information.

The processor 870 may determine whether the sensed object information satisfies a predetermined condition regarding the quality of sensed information by comparing the sensed object information with pre-stored reference information.

The processor 870 may generate map data using second object information determined to satisfy the predetermined condition regarding the quality of sensed information.

For example, the processor 870 may divide an area around the vehicle 100 into a first area having a brightness level equal to or higher than a predetermined value and a second area having a brightness level lower than the predetermined value, based on a result of the determination of whether the sensed object information satisfies the predetermined condition.

In this case, the processor 870 may generate map data by combining the fixed object information with the sensed object information, for the first area.

In this case, the processor 870 may generate map data by combining the fixed object information with the mobile object information, for the second area.

Referring to FIG. 13, the processor 870 may separate a first area A1320 to which a head lamp of the vehicle 100 projects light from a second area A1330 to which the head lamp does not project light.

In this case, the processor 870 may generate map data by combining fixed object information with sensed object information, for the first area A1320.

Since the sensed object information may be regarded as correct for the first area A1320 having a brightness level equal to or higher than the predetermined value, map data may be generated using the sensed object information.

In this case, the processor 870 may generate map data by combining the fixed object information with mobile object information, for the second area A1330.

Since the sensed object information may be regarded as relatively incorrect for the second area A1330 having a brightness level lower than the predetermined value, map data may be generated using only the mobile object information out of the sensed object information.

The processor 870 may generate a driving route based on the map data.

As the operation system 700 configured as described above generates map data in correspondence with an ambient environment of the vehicle 100 sensing an object, the operation system 700 may generate map data fast and accurately.

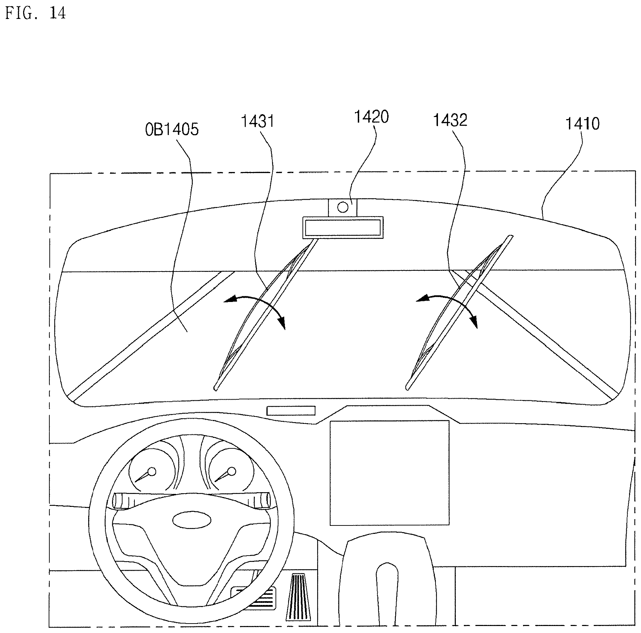

FIG. 14 is a view illustrating an operation system according to an embodiment of the present disclosure.

The processor 870 may control the at least one sensor 810 to sense an object around the vehicle 100 driving in a first section.

The processor 870 may generate mobile object information based on sensed object information.

The sensed object information may include fixed object information and mobile object information.

Mobile object information is information about a mobile object in the sensed object information, and may be generated by the processor 870.

The processor 870 may determine whether an object is a mobile object based on object shape information about the object.

The processor 870 may determine whether an object is a mobile object based on object motion information about the object.

The processor 870 may generate map data by combining the stored fixed object information with the generated mobile object information.

The processor 870 may generate map data by combining the stored fixed object information with the generated mobile object information, based on the object location information.

Referring to FIG. 14, the vehicle 100 may include a pair of wipers 1431 and 1432 for wiping a windshield 1410.

The vehicle 100 may capture an image of the surroundings of the vehicle 100 using a camera 1420 of the vehicle 100, while driving on a road OB1405.

The pair of wipers 1431 and 1432 may wipe the windshield 1410, while rotating with their one ends fixed. Herein, the pair of wipers 1431 and 1432 may hide a lens of the camera 1420, thus interfering with capturing of an object outside the vehicle 100 through the camera 1420.

The processor 870 may receive image data captured by the camera 1420 from the camera 1420.

The processor 870 may generate object information based on an image captured by the camera 1420.

The processor 870 may generate mobile object information based on the generated object information.

The processor 870 may generate mobile object information except for objects provided in the vehicle 100, such as the wipers 1431 and 1432.

The processor 870 may generate mobile object information except for objects provided in the vehicle 100, such as the wipers 1431 and 1432, based on object shape information.

The processor 870 may generate mobile object information except for objects provided in the vehicle 100, such as the wipers 1431 and 1432, based on object motion information.

The object motion information may be generated based on data of a specific object sensed at different time points by the processor 870.

The object motion information may be generated based on data of the specific object sensed at different time points by the processor 870 and included in the generated object information.

The object motion information may be generated based on data of the specific object sensed at different time points by the object detection device 300 and provided to the processor 870.

The processor 870 may generate map data based on the stored fixed object information and the generated mobile object information.

As the operation system 700 configured as described above eliminates unnecessary interference from sensed object information, the operation system 700 may generate map data and a driving route based on the accurate object information.

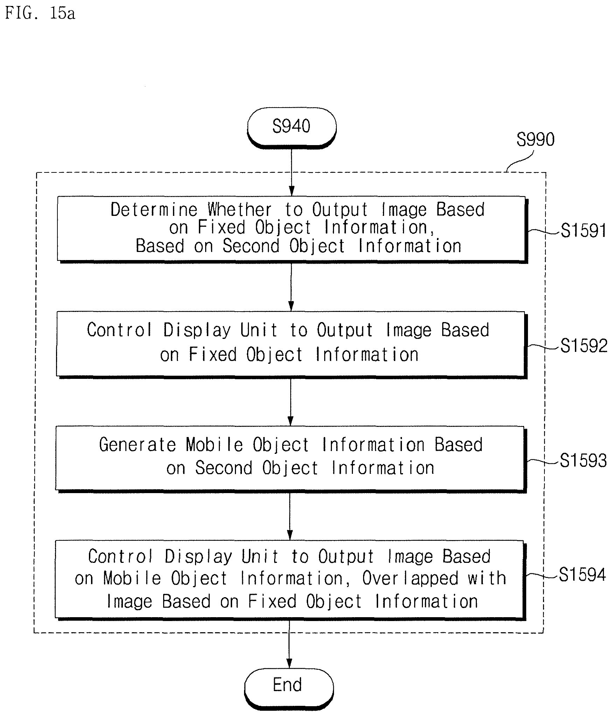

FIG. 15A is a flowchart illustrating the step S990 for controlling the display unit, illustrated in FIG. 9.

The processor 870 may determine whether to output an image based on fixed object information.

The processor 870 may determine whether to output an image based on fixed object information, according to second object information (S1591).

The processor 870 may determine whether the difference between second object information and fixed object information about a specific fixed object exceeds a predetermined range by comparing the second object information with the fixed object information.

The processor 870 may compare the second object information with the fixed object information based on at least one of object location information or object shape information.

The processor 870 may control the display unit 251 to output an image based on the fixed object information based on a result of the determination of whether to output an image based on the fixed object information (S1592).

If determining that the difference between the second object information and fixed object information about the specific fixed object exceeds the predetermined range, the processor 870 may control the display unit 251 to output an image of the object based on the second object information.

If determining that the difference between the second object information and fixed object information about the specific fixed object is within the predetermined range, the processor 870 may control the display unit 251 to output an image of the object based on the fixed object information.

The processor 870 may generate mobile object information based on the second object information (S1593).

The processor 870 may generate mobile object information by extracting only information determined to be information about a mobile object from the second object information.

The processor 870 may determine whether information about an object is mobile object information based on object shape information about the object.

The processor 870 may determine whether information about an object is mobile object information based on object motion information about the object.

The object motion information may be generated based on data of the specific object sensed at different time positions by the processor 870.

The object motion information may be included in the second object information.

The processor 870 may receive the object motion information from the object detection device 300.

A mobile object is an object which is not fixed at a specific position and is movable, distinguishable from a fixed object.

The mobile object may be any of objects which are moving at the moment of sensing the objects by a sensor or which are not fixed but moving in view of the nature of the objects.

The mobile object may be any of another vehicle, a pedestrian, a 2-wheel vehicle, a temporary structure, an animal, and so on.

The processor 870 may control the display unit 251 to output an image based on the mobile object information, overlapped with an image based on the fixed object information (S1594).

The processor 870 may control the display unit 251 to display an area sensed by the at least one sensor 810 of the vehicle 100, overlapped with an image based on the fixed object information.

The operation system 700 configured as described above may advantageously display stored object information and sensed object information efficiently at the same time.

Further, the operation system 700 may advantageously display a display user-friendly.

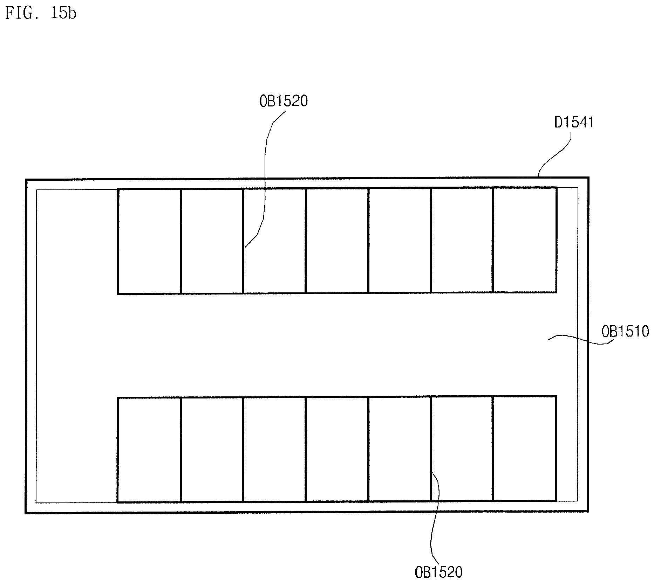

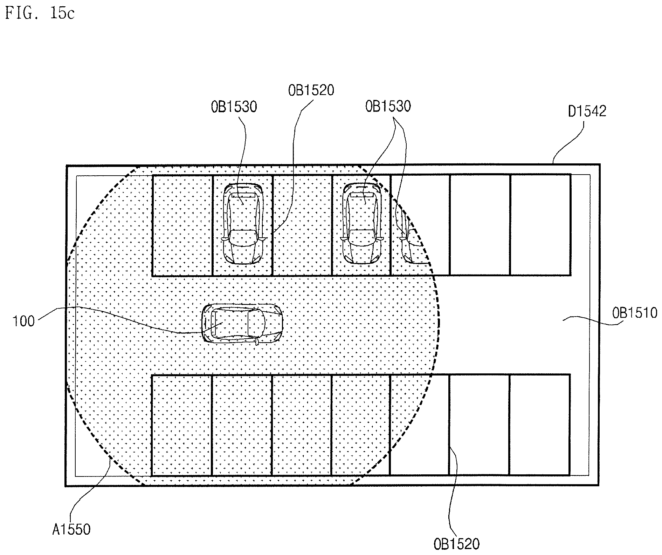

FIGS. 15B and 15C are views referred to for describing an operation system according to an embodiment of the present disclosure.

The processor 870 may control the display unit 251 to output an image of an object (S990).

The processor 870 may control the display unit 251 to output an image based on fixed object information.

Referring to FIG. 15B, the processor 870 may control the display unit 251 to output an image D1541 including an area OB1510 and parking lines OB1520 of a parking lot, based on fixed object information.

For example, if the vehicle 100 enters the parking lot or is determined to be about to enter the parking lot, the processor 870 may control the display unit 251 to output the image D1541 including the area OB1510 of the parking lot, as illustrated in FIG. 15B.

Referring to FIG. 15C, the processor 870 may generate mobile object information about other parked vehicles OB1530 based on data received from the object detection device 300.

Meanwhile, the processor 870 may receive the mobile object information about the other parked vehicles OB1530 from the object detection device 300.

Meanwhile, the processor 870 may receive mobile object information wirelessly from another vehicle, a server, or a pedestrian through the communication device 400.

The processor 870 may control the display unit 251 to output an image based on mobile object information, overlapped with an image based on fixed object information.

Referring to FIG. 15C, the processor 870 may control the display unit 251 to output an image D1542 including the vehicle 100, the other parked vehicles OB1530, and the fixed objects OB1510 and OB1520.

The processor 870 may control the display unit 251 to further display an area A1550 sensed by the at least one sensor of the vehicle 100.

The operation system configured as described above may advantageously display an image of a fixed object fast and efficiently based on stored fixed object information.

Further, the operation system 700 may advantageously increase the accuracy of an image of a fixed object output through the display unit 251 by comparing the stored object information with sensed object information.

Further, the operation system 700 may advantageously increase driving safety and enhance UX by displaying a fixed object and a mobile object user-friendly.

As is apparent from the foregoing description, the embodiments of the present disclosure have the following one or more effects.

First, since a driving route is generated based on stored information and sensed information, the driving route may be generated faster than when a driving route is generated only based on data sensed in real time. Therefore, the driving safety of a vehicle may be increased.

Secondly, an accurate driving route may be generated by comparing stored information with sensed information, thereby increasing the driving safety of the vehicle.

The present disclosure may be implemented as code that can be written on a computer-readable recording medium and thus read by a computer system. The computer-readable recording medium may be any type of recording device in which data is stored in a computer-readable manner. Examples of the computer-readable recording medium include a Hard Disk Drive (HDD), a Solid State Disk (SSD), a Silicon Disk Drive (SDD), a Read Only Memory (ROM), a Random Access Memory (RAM), a Compact Disk ROM (CD-ROM), a magnetic tape, a floppy disc, an optical data storage, and a carrier wave (e.g., data transmission over the Internet). The computer may include a processor or a controller. The above embodiments are therefore to be construed in all aspects as illustrative and not restrictive. The scope of the present disclosure should be determined by the appended claims.

## Claims

1. A method for controlling an operation system of a vehicle (100), the method comprising:
first sensing (S910) an object around the vehicle (100) driving in a first section, by at least one sensor (800), whereby the at least one sensor (800) comprises a camera;
storing (S930) fixed object information based on first object information, the first object information being based on the first sensing, by a processor (870), the first object information including fixed object information and mobile object information, the fixed object information being based on an object fixed at a certain position;
second sensing (S940) an object around the vehicle (100), the vehicle (100) driving in the first section, by the at least one sensor (800); and
comparing the stored fixed object information with second object information based on the second sensing, the second object information including fixed object information and mobile object information, and generating (S950) a driving route based on a result of the comparing the stored fixed object information with the second object information, by the processor (870),
wherein the generation (S950) of a driving route comprises:
generating (S1154) mobile object information based on the second object information by the processor (870);
determining (S1155) whether there is any mobile object located within a predetermined distance from the vehicle (100) based on the generated mobile object information, by the processor (870);
generating the driving route based on the stored fixed object information and the second object information when it is determined that no mobile object is located within the predetermined distance from the vehicle (100), by the processor (870);
generating the driving route based on the second object information for an area including the mobile object when it is determined that a mobile object is located within the predetermined distance from the vehicle (100) by the processor (870);
dividing an area around the vehicle (100) into a first area to which a head lamp of the vehicle (100) projects light and a second area to which the head lamp of the vehicle (100) does not project light by the processor (870);
generating map data for the first area by combining the stored fixed object information with the second object information, and generating map data for the second area by combining the stored fixed object information with mobile object information whereby the processor (870) generates said mobile object information by extracting only information determined to be information about a mobile object from the second object information; and
generating the driving route based on the map data by the processor (870).

2. The method according to claim 1, wherein the storing (S930) of fixed object information comprises:
determining (S1031) whether at least one part of the first object information is fixed object information; and
storing (S1033) the at least one part of the first object information that is determined to be the stored fixed object information.

3. The method according to claim 1 or 2, wherein each of the first object information and the second object information includes object location information and object shape information, and the method further comprises storing (S920) location information about the first section in which the object around the vehicle (100) has been sensed during driving of the vehicle (100) by the processor (870).

4. The method according to claim 3, wherein the generation (S950) of a driving route comprises:
generating (S1156) map data by combining the stored fixed object information with the second object information based on the object location information by the processor (870); and
generating (S1157) the driving route based on the map data by the processor (870).

5. The method according to any one of claims 1 to 4, wherein the second sensing (S940) comprises receiving, through a communication device of the vehicle (100) and from another vehicle driving in the first section, information on an object around the other vehicle.

6. The method according to any one of claims 1 to 5, further comprising updating (S960) the stored fixed object information based on the second object information and storing the updated fixed object information by the processor (870), and
wherein the updating (S960) and storing of the fixed object information comprises:
determining (S1161) whether there is any part of the second object information identical to the stored fixed object information by comparing the second object information with the stored fixed object information by the processor (870); and
updating (S1162) and storing the stored fixed object information based on a result of the determination of whether there is any part of the second object information identical to the stored fixed object information by the processor (870).

7. The method according to claim 6, further comprising:
determining (S970) the number of repeated sensings of each fixed object based on the updated fixed object information by the processor (870); and
deleting (S980) information about a fixed object sensed repeatedly fewer times than a predetermined number out of the updated fixed object information in a memory by the processor (870) .

8. The method according to claim 6 or 7, wherein the generation (S950) of a driving route comprises:
determining (S1151) the number of repeated sensings of each fixed object based on the updated fixed object information by the processor (870); and
generating the driving route based on information, out of the updated fixed object information, about a fixed object sensed repeatedly at a predetermined number or more times and the second object information, by the processor (870).

9. The method according to any one of claims 1 to 8, wherein the storing (930) of fixed object information comprises:
determining (S1032) whether the first object information satisfies a predetermined condition regarding the quality of sensed information by comparing the first object information with reference information by the processor (870); and
storing (S1033) the fixed object information based on the first object information by the processor (870) when it is determined that the first object information satisfies the predetermined condition regarding the quality of sensed information.

10. The method according to any one of claims 1 to 9, wherein the generation (S950) of a driving route comprises:
determining (S1152) whether at least a part of the stored fixed object information is information about a fixed object having at least one of a varying shape and a varying color, by the processor (870); and
generating at least a part of the driving route based on the second object information when the at least a part of the driving route is generated for an area within a certain distance from the fixed object having at least one of a varying shape or a varying color.

11. The method according to any one of claims 1 to 10, wherein the generation (S950) of a driving route comprises:
determining (S1152) whether the second object information satisfies a predetermined condition regarding the quality of sensed information by comparing the second object information with reference information, by the processor (870); and
generating the driving route based on the stored fixed object information and the second object information when it is determined that the second object information satisfies the predetermined condition regarding the quality of sensed information, by the processor (870).

12. The method according to any one of claims 1 to 11, wherein the generation (S950) of a driving route comprises:
determining whether the second object information satisfies a predetermined condition regarding the quality of sensed information by comparing the second object information with reference information by the processor (870).

13. The method according to any one of claims 1 to 12, further comprising:
controlling (S1592) a display unit to output an image based on the stored fixed object information by the processor (870) ;
generating (S1593) mobile object information based on the second object information by the processor (870); and
controlling (S1594) the display unit to output an image based on the mobile object information, overlapped with the image based on the stored fixed object information by the processor (870).

## Patentansprüche

1. Verfahren zur Steuerung eines Betriebssystems eines Fahrzeugs (100), wobei das Verfahren aufweist:
erstes Abtasten (S910) eines Objekts um das Fahrzeug (100) herum, das in einem ersten Abschnitt fährt, durch wenigstens einen Sensor (800), wobei der wenigstens eine Sensor (800) eine Kamera aufweist;
Speichern (S930) von Informationen über feste Objekte basierend auf ersten Objektinformationen durch einen Prozessor (870), wobei die ersten Objektinformationen auf der ersten Abtastung basieren, wobei die ersten Objektinformationen Informationen über feste Objekte und Informationen über mobile Objekte umfassen, wobei die Informationen über feste Objekte auf einem Objekt basieren, das in einer gewissen Position fixiert ist;
zweites Abtasten (S940) eines Objekts um das Fahrzeug (100) herum, das in dem ersten Abschnitt fährt, durch den wenigstens einen Sensor (800); und
Vergleichen der gespeicherten Informationen über feste Objekte mit zweiten Objektinformationen, die auf der zweiten Abtastung basieren, wobei die zweiten Objektinformationen Informationen über feste Objekte und Informationen über mobile Objekte umfassen, und Erzeugen (S950) einer Fahrroute durch den Prozessor (870) basierend auf einem Ergebnis des Vergleichs der gespeicherten Informationen über feste Objekte mit den zweiten Objektinformationen,
wobei die Erzeugung (S950) der Fahrroute aufweist:
Erzeugen (S1154) von Informationen über mobile Objekte durch den Prozessor (870) basierend auf den zweiten Objektinformationen;
Bestimmen (S1155), ob es ein mobiles Objekt gibt, das sich innerhalb eines vorbestimmten Abstands von dem Fahrzeug (100) befindet, durch den Prozessor (870) basierend auf den erzeugen Informationen über mobile Objekte;
Erzeugen der Fahrroute durch den Prozessor (870) basierend auf den gespeicherten Informationen über feste Objekte und den zweiten Objektinformationen, wenn bestimmt wird, dass sich kein mobiles Objekt innerhalb des vorbestimmten Abstands von dem Fahrzeug (100) befindet;
Erzeugen der Fahrroute durch den Prozessor (870) basierend auf den zweiten Objektinformationen für einen Bereich, der das mobile Objekt umfasst, wenn bestimmt wird, dass sich ein mobiles Objekt innerhalb des vorbestimmten Abstands von dem Fahrzeug (100) befindet;
Unterteilen eines Bereichs um das Fahrzeug (100) herum in einen ersten Bereich, in den ein Scheinwerfer des Fahrzeugs (100) Licht projiziert, und einen zweiten Bereich, in den der Scheinwerfer des Fahrzeugs (100) kein Licht projiziert, durch den Prozessor (870);
Erzeugen von Kartendaten für den ersten Bereich durch Kombinieren der gespeicherten Informationen über feste Objekte mit den zweiten Objektinformationen und Erzeugen von Kartendaten für den zweiten Bereich durch Kombinieren der gespeicherten Informationen über feste Objekte mit Informationen über mobile Objekte, wobei der Prozessor (870) die Informationen über mobile Objekte erzeugt, indem er nur Informationen aus den zweiten Objektinformationen extrahiert, die als Informationen über ein mobiles Objektbestimmt werden; und
Erzeugen der Fahrroute durch den Prozessor (870) basierend auf den Kartendaten.

2. Verfahren nach Anspruch 1, wobei das Speichern (S930) der Informationen über feste Objekte aufweist:
Bestimmen (S1031), ob wenigstens ein Teil der ersten Objektinformationen Informationen über feste Objekte sind; und
Speichern (S1033) des wenigstens einen Teils der ersten Objektinformationen, für den bestimmt wird, dass er die gespeicherten Informationen über feste Objekte ist.

3. Verfahren nach Anspruch 1 oder 2, wobei jede der ersten Objektinformationen und der zweiten Objektinformationen Objektortsinformationen und Objektforminformationen umfasst, und wobei das Verfahren ferner das Speichern (S920) von Ortsinformationen über den ersten Abschnitt, in dem das Objekt um das Fahrzeug (100) herum während des Fahrens des Fahrzeugs (100) abgetastet wurde, durch den Prozessor (870) aufweist.

4. Verfahren nach Anspruch 3, wobei die Erzeugung (S950) einer Fahrroute aufweist:
Erzeugen (S1156) von Kartendaten durch Kombinieren der gespeicherten Informationen über feste Objekte mit den zweiten Objektinformationen durch den Prozessor (870) basierend auf den Objektortsinformationen; und
Erzeugen (S1157) der Fahrroute durch den Prozessor (870) basierend auf den Kartendaten.

5. Verfahren nach einem der Ansprüche 1 bis 4, wobei das zweite Abtasten (S940) das Empfangen von Informationen über ein Objekt um ein anderes Fahrzeug herum durch eine Kommunikationsvorrichtung des Fahrzeugs (100) und von dem anderen Fahrzeug, das in dem ersten Abschnitt fährt, aufweist.

6. Verfahren nach einem der Ansprüche 1 bis 5, das ferner das Aktualisieren (S960) der gespeicherten Informationen über feste Objekte basierend auf den zweiten Objektinformationen und das Speichern der aktualisierten Informationen über feste Objekte durch den Prozessor (870) aufweist, und
wobei das Aktualisieren (S960) und Speichern der Informationen über feste Objekte aufweist:
Bestimmen (S1161) durch den Prozessor (870), ob es irgendeinen Teil der zweiten Objektinformationen gibt, der identisch mit den gespeicherten Informationen über feste Objekte ist, indem die zweiten Objektinformationen mit den gespeicherten Informationen über feste Objekte verglichen werden; und
Aktualisieren (S1162) und Speichern der Informationen über feste Objekte basierend auf einem Ergebnis der Bestimmung, ob es irgendeinen Teil der zweiten Objektinformationen gibt, der mit den gespeicherten Informationen über feste Objekte identisch ist, durch den Prozessor (870).

7. Verfahren nach Anspruch 6, das ferner aufweist:
Bestimmen (S970) der Anzahl wiederholter Abtastungen jedes festen Objekts durch den Prozessor (870) basierend auf den aktualisierten Informationen über feste Objekte; und
Löschen (S980) von Informationen über ein festes Objekt, das wiederholt wenigere Male als eine vorbestimmte Anzahl von Malen abgetastet wird, durch den Prozessor (870) aus den aktualisierten Informationen über feste Objekte in einem Speicher.

8. Verfahren nach Anspruch 6 oder 7, wobei die Erzeugung (S950) einer Fahrroute aufweist:
Bestimmen (S1151) der Anzahl wiederholter Abtastungen jedes festen Objekts durch den Prozessor (870) basierend auf aktualisierten Informationen über feste Objekte; und
Erzeugen der Fahrroute basierend auf Informationen über ein festes Objekt, das eine vorbestimmte Anzahl von Malen oder mehr Male wiederholt abgetastet wurde, aus den aktualisierten Informationen über feste Objekte und den zweiten Objektinformationen durch den Prozessor (870).

9. Verfahren nach einem der Ansprüche 1 bis 8, wobei das Speichern (930) der Informationen über feste Objekte aufweist:
Bestimmen (S1032), ob die ersten Objektinformationen eine vorbestimmte Bedingung bezüglich der Qualität der abgetasteten Informationen erfüllen, durch Vergleichen der ersten Objektinformationen mit Referenzinformationen durch den Prozessor (870); und
Speichern (S1033) der Informationen über feste Objekte durch den Prozessor (870) basierend auf den ersten Objektinformationen, wenn bestimmt wird, dass die ersten Objektinformationen die vorbestimmte Bedingung bezüglich der Qualität der abgetasteten Informationen erfüllt.

10. Verfahren nach einem der Ansprüche 1 bis 9, wobei die Erzeugung (S950) einer Fahrroute aufweist:
Bestimmen (S1152), ob wenigstens ein Teil der gespeicherten Informationen über feste Objekte Informationen über ein festes Objekt ist, das eine veränderliche Form und/oder eine veränderliche Farbe hat, durch den Prozessor (870); und
Erzeugen wenigstens eines Teils der Fahrroute basierend auf den zweiten Objektinformationen, wenn wenigstens ein Teil der Fahrroute für einen Bereich innerhalb eines gewissen Abstands von dem festen Objekt mit veränderlicher Form und/oder veränderlicher Farbe erzeugt wird.

11. Verfahren nach einem der Ansprüche 1 bis 10, wobei die Erzeugung (S950) einer Fahrroute aufweist:
Bestimmen (S1152), ob die zweiten Objektinformationen eine vorbestimmte Bedingung bezüglich der Qualität der abgetasteten Informationen erfüllen, durch Vergleichen der zweiten Objektinformationen mit Referenzinformationen durch den Prozessor (870); und
Erzeugen der Fahrroute basierend auf den gespeicherten Informationen über feste Objekte und den zweiten Objektinformationen, wenn bestimmt wird, dass die zweiten Objektinformationen die vorbestimmte Bedingung bezüglich der Qualität der abgetasteten Informationen erfüllen, durch den Prozessor (870).

12. Verfahren nach einem der Ansprüche 1 bis 11, wobei die Erzeugung (S950) einer Fahrroute aufweist:
Bestimmen, ob die zweiten Objektinformationen eine vorbestimmte Bedingung bezüglich der Qualität der abgetasteten Informationen erfüllen, durch Vergleichen der zweiten Objektinformationen mit Referenzinformationen durch den Prozessor (870).

13. Verfahren nach einem der Ansprüche 1 bis 12, das ferner aufweist:
Steuern (S1592) einer Anzeigeeinheit durch den Prozessor (870), um basierend auf den gespeicherten Informationen über feste Objekte ein Bild auszugeben;
Erzeugen (S1593) von Informationen über mobile Objekte durch den Prozessor (870) basierend auf den zweiten Objektinformationen; und
Steuern (S1594) der Anzeigeeinheit durch den Prozessor (870), um basierend auf den Informationen über mobile Objekte ein Bild auszugeben, das mit dem Bild, das auf den gespeicherten Informationen über feste Objekte basiert, überlappt.

## Revendications

1. Procédé de commande d'un système de fonctionnement d'un véhicule (100), le procédé comprenant :
la première détection (S910) d'un objet autour du véhicule (100) se déplaçant dans une première section, par au moins un détecteur (800), de telle manière que l'au moins un détecteur (800) comprenne une caméra ;
le stockage (S930) d'informations d'objet fixe sur la base de premières informations d'objet, les premières informations d'objet étant basées sur la première détection, par un processeur (870), les premières informations d'objet incluant des informations d'objet fixe et des informations d'objet mobile, les informations d'objet fixe étant basées sur un objet fixe à une certaine position ;
la seconde détection (S940) d'un objet autour du véhicule (100), le véhicule (100) se déplaçant dans la première section, par l'au moins un capteur (800) ; et
la comparaison des informations d'objet fixe stockées à des secondes informations d'objet sur la base de la seconde détection, les secondes informations d'objet incluant des informations d'objet fixe et des informations d'objet mobile, et la génération (S950) d'un itinéraire de déplacement sur la base d'un résultat de la comparaison des informations d'objet fixe stockées aux secondes informations d'objet, par le processeur (870),
dans lequel la génération (S950) d'un itinéraire de déplacement comprend :
la génération (S1154) d'informations d'objet mobile sur la base des secondes informations d'objet par le processeur (870) ;
la détermination (S1155) s'il y a un objet mobile situé à une distance prédéterminée du véhicule (100) sur la base des informations d'objet mobile générées, par le processeur (870) ;
la génération de l'itinéraire de déplacement sur la base des informations d'objet fixe stockées et des secondes informations d'objet lorsqu'il est déterminé qu'aucun objet mobile n'est situé à la distance prédéterminée du véhicule (100), par le processeur (870) ;
la génération de l'itinéraire de déplacement sur la base des secondes informations d'objet pour une zone incluant l'objet mobile lorsqu'il est déterminé qu'un objet mobile est situé à la distance prédéterminée du véhicule (100) par le processeur (870) ;
la division d'une zone autour du véhicule (100) en une première zone dans laquelle un phare du véhicule (100) projette une lumière et une seconde zone dans laquelle le phare du véhicule (100) ne projette pas de lumière par le processeur (870) ;
la génération de données de carte pour la première zone par la combinaison des informations d'objet fixe stockées avec les secondes informations d'objet, et la génération de données de carte pour la seconde zone par la combinaison des informations d'objet fixe stockées avec des informations d'objet mobile de telle manière que le processeur (870) génère lesdites informations d'objet mobile par l'extraction uniquement d'informations déterminées comme étant des informations relatives à un objet mobile à partir des secondes informations d'objet ; et
la génération de l'itinéraire de déplacement sur la base des données de carte par le processeur (870).

2. Procédé selon la revendication 1, dans lequel le stockage (S930) d'informations d'objet fixe comprend :
la détermination (S1031) si au moins une partie des premières informations d'objet sont des informations d'objet fixe ; et
le stockage (S1033) de l'au moins une partie des premières informations d'objet qui sont déterminées comme étant des informations d'objet fixe stockées.

3. Procédé selon la revendication 1 ou 2, dans lequel chacune des premières informations d'objet et des secondes informations d'objet incluent des informations d'emplacement d'objet et des informations de forme d'objet, et le procédé comprend en outre le stockage (S920) d'informations d'emplacement relatives à la première section dans laquelle l'objet autour du véhicule (100) a été détecté au cours du déplacement du véhicule (100) par le processeur (870).

4. Procédé selon la revendication 3, dans lequel la génération (S950) d'un itinéraire de déplacement comprend :
la génération (S1156) de données de carte par la combinaison des informations d'objet fixe stockées avec les secondes informations d'objet sur la base des informations d'emplacement d'objet par le processeur (870) ; et
la génération (SI 157) de l'itinéraire de déplacement sur la base des données de carte par le processeur (870).

5. Procédé selon l'une quelconque des revendications 1 à 4, dans lequel la seconde détection (S940) comprend la réception, via un dispositif de communication du véhicule (100) et depuis un autre véhicule se déplaçant dans la première section, d'informations relatives à un objet autour de l'autre véhicule.

6. Procédé selon l'une quelconque des revendications 1 à 5, comprenant en outre la mise à jour (S960) des informations d'objet fixe stockées sur la base des secondes informations d'objet et le stockage des informations d'objet fixe mises à jour par le processeur (870), et
dans lequel la mise à jour (S960) et le stockage des informations d'objet fixe comprennent :
la détermination (S1161) s'il y a une partie des secondes informations d'objet qui sont identiques aux informations d'objet fixe stockées par la comparaison des secondes informations d'objet aux informations d'objet fixe stockées par le processeur (870) ; et
la mise à jour (S1162) et le stockage des informations d'objet fixe stockées sur la base d'un résultat de la détermination s'il y a une partie des secondes informations d'objet qui sont identiques aux informations d'objet fixe stockées par le processeur (870).

7. Procédé selon la revendication 6, comprenant en outre :
la détermination (S970) du nombre de détections répétées de chaque objet fixe sur la base des informations d'objet fixe mises à jour par le processeur (870) ; et
la suppression (S980) d'informations relatives à un objet fixe détecté répétitivement moins de fois qu'un nombre prédéterminé parmi les informations d'objet fixe mises à jour dans une mémoire par le processeur (870).

8. Procédé selon la revendication 6 ou 7, dans lequel la génération (S950) d'un itinéraire de déplacement comprend :
la détermination (S1151) du nombre de détections répétées de chaque objet fixe sur la base des informations d'objet fixe mises à jour par le processeur (870) ; et
la génération de l'itinéraire de déplacement sur la base d'informations, parmi les informations d'objet fixe mises à jour, relatives à un objet fixe détecté répétitivement un nombre prédéterminé de fois ou plus et des secondes informations d'objet, par le processeur (870).

9. Procédé selon l'une quelconque des revendications 1 à 8, dans lequel le stockage (930) des informations d'objet fixe comprend :
la détermination (S1032) si les premières informations d'objet satisfont une condition prédéterminée relative à la qualité d'informations détectées par la comparaison des premières informations d'objet à des informations de référence par le processeur (870) ; et
le stockage (S1033) des informations d'objet fixe sur la base des premières informations d'objet par le processeur (870) lorsqu'il est déterminé que les premières informations d'objet satisfont la condition prédéterminée relative à la qualité d'informations détectées.

10. Procédé selon l'une quelconque des revendications 1 à 9, dans lequel la génération (S950) d'un itinéraire de déplacement comprend :
la détermination (S1152) si au moins une partie des informations d'objet fixe stockées sont des informations relatives à un objet fixe ayant au moins l'une parmi une forme variable et une couleur variable, par le processeur (870) ; et
la génération d'au moins une partie de l'itinéraire de déplacement sur la base des secondes informations d'objet lorsque l'au moins une partie de l'itinéraire de déplacement est générée pour une zone à une certaine distance de l'objet fixe ayant au moins l'une parmi une forme variable et une couleur variable.

11. Procédé selon l'une quelconque des revendications 1 à 10, dans lequel la génération (S950) d'un itinéraire de déplacement comprend :
la détermination (SI 152) si les secondes informations d'objet satisfont une condition prédéterminée relative à la qualité d'informations détectées par la comparaison des secondes informations d'objet à des informations de référence, par le processeur (870) ; et
la génération de l'itinéraire de déplacement sur la base des informations d'objet fixe stockées et des secondes informations d'objet lorsqu'il est déterminé que les secondes informations d'objet satisfont la condition prédéterminée relative à la qualité d'informations détectées, par le processeur (870).

12. Procédé selon l'une quelconque des revendications 1 à 11, dans lequel la génération (S950) d'un itinéraire de déplacement comprend :
la détermination si les secondes informations d'objet satisfont une condition prédéterminée relative à la qualité d'informations détectées par la comparaison des secondes informations d'objet à des informations de référence par le processeur (870).

13. Procédé selon l'une quelconque des revendications 1 à 12, comprenant en outre :
la commande (S1592) à une unité d'affichage de délivrer une image sur la base des informations d'objet fixe stockées par le processeur (870) ;
la génération (S1593) des informations d'objet mobile sur la base des secondes informations d'objet par le processeur (870) ; et
la commande (S1594) à l'unité d'affichage de délivrer une image sur la base des informations d'objet mobiles, chevauchée par l'image sur la base des informations d'objet fixe stockées par le processeur (870).
